(19) Europäisches Patentamt / European Patent Office / Office européen des brevets

(11) **EP 3 445 689 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.10.2025 Patentblatt 2025/41**

(45) Hinweis auf die Patenterteilung:
**15.12.2021 Patentblatt 2021/50**

(21) Anmeldenummer: 17709000.8

(22) Anmeldetag: **21.02.2017**

(51) Internationale Patentklassifikation (IPC):
**B65G 47/08** *(2006.01)*

(52) Gemeinsame Patentklassifikation (CPC):
**B65G 47/086**

(86) Internationale Anmeldenummer:
**PCT/EP2017/053857**

(87) Internationale Veröffentlichungsnummer:
**WO 2017/182168 (26.10.2017 Gazette 2017/43)**

(54) **VERFAHREN ZUM UMGANG MIT IN MINDESTENS EINER REIHE HINTEREINANDER BEWEGTEN STUECKGUETERN**

METHOD FOR HANDLING PIECE GOODS MOVED ONE BEHIND THE OTHER IN AT LEAST ONE ROW

PROCÉDÉ POUR MANIPULER AU MOINS UNE LIGNE DE MARCHANDISES DÉPLACÉES LES UNES DERRIÈRE LES AUTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2016 DE 102016206655**

(43) Veröffentlichungstag der Anmeldung:
**27.02.2019 Patentblatt 2019/09**

(73) Patentinhaber: **Krones Aktiengesellschaft**
**93073 Neutraubling (DE)**

(72) Erfinder:
• **ASTNER, Michael**
**93073 Neutraubling (DE)**
• **BEER, Erhard**
**93073 Neutraubling (DE)**
• **KOLLMUSS, Manuel**
**93073 Neutraubling (DE)**
• **MEHDI, Arsalan**
**93073 Neutraubling (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
EP-A1- 2 662 293    EP-A2- 2 246 277
WO-A1-2010/089783    WO-A1-2010/106529
DE-A1- 10 219 129    DE-A1- 4 439 728
DE-U1- 20 108 401

EP 3 445 689 B2

**Beschreibung**

Die vorliegende Erfindung betrifft ein Verfahren zum Umgang mit in mindestens einer Reihe hintereinander bewegten Stückgütern mit den Merkmalen des unabhängigen Verfahrensanspruchs 1.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit Steuer- und regelbaren Antrieben besitzt. Mit den Steuer- und regelbaren Antrieben ist es möglich, eine gewünschte Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Der anhand von unterschiedlichen Dokumenten veranschaulichte bekannte Stand der Technik kann in der Praxis mehrere Nachteile mit sich bringen. Beim Lückenziehen oder Übergeben der Stückgüter zwischen Zuteilband, Transportband und ggf. auch Lagenbildungsband entsteht das Risiko, durch die jeweiligen Geschwindigkeitsunterschiede und hohen Beschleunigungs- und/oder entsprechend steilen Verzögerungsrampen die Stückgüter nicht in der anzustrebenden exakten Weise übergeben zu können. Einzelne Stückgüter können sich sogar von ihren vorgegebenen Positionen ab- oder wegdrehen. Eine nicht zu vernachlässigende Rolle spielt kommt zudem dem Reibwiderstand zwischen dem jeweiligen Förder- oder Transportband und der Unterseite des jeweiligen Stückgutes zu, was dazu führt, dass die Lücken zwischen den Takten nicht exakt reproduzierbar sind, sondern unterschiedlich ausfallen können. Zusätzlich kann ein Leistungsverlust entstehen, der sich durch den zurückzulegenden Weg der einzelnen Lücken beim sog. Eintakten vom Zuteilband auf das Transportband ergibt. Alle diese Effekte erhöhen die Zeitdauer, die für die Erstellung einer Palette benötigt wird.

Um diese Nachteile zu vermeiden, werden in der EP 2 107 018 A1 ein Verfahren und eine Vorrichtung vorgeschlagen, mit denen eine sichere, schnelle und qualitativ hochwertige Bereitstellung von Takten aus Gebinden und/oder Gebindegruppen möglich sein sollen, um solchermaßen die Reihen für die Lagen einer Palette auf effektive Weise erstellen zu können. Die vorgeschlagene Vorrichtung dient dem Zusammenstellen und Ausrichten von Gebindegruppen, wobei die Vorrichtung ein Zuteilband, ein Transportband und ein Reihen- oder Lagenbildungsband umfasst. Das Zuteilband, das Transportband und das Reihen- oder Lagenbildungsband ist zum Antrieb mit jeweils einem eigenen Motor versehen. Mittels einer Steuerung wird die Geschwindigkeit des Zuteilbandes reguliert, damit die auf dem Zuteilband Stoß an Stoß transportierten Gebinde bzw. Gebindegruppen auf dem Transportband in mehrere Takte aus Gebinden bzw. Gebindegruppen aufgeteilt werden können. Zwischen den einzelnen Takten werden vordefinierte Lücken gebildet. Dem Reihen- oder Lagenbildungsband kann ein Roboter zugeordnet sein, der die vom Transportband einlaufenden Takte zur Lagenbildung in Transportrichtung oder quer zur Transportrichtung verschieben und/oder drehen kann. Zudem soll das Lagenbildungsband die Erzeugung einer aus mehreren Reihen gebildeten Lage ermöglichen.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Das Dokument DE 10219129 A1 beschreibt ein Verfahren zum Drehen und wahlweisen Verteilen oder Zusammenführen von Packs, die in mindestens einer Zuteilbahn zugeführt und in mindestens einer zu der oder den Zuteilbahnen parallelen Auslaufbahn in einer um 90 Grad gedrehten Anordnung abgeführt werden. Hierbei werden jeweils mindestens zwei Packs erfasst und als Gruppe um 90° verdreht.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen. Das Verfahren soll die Verarbeitung von Stückgütern ermöglichen, die in mindestens einer Reihe befördert bzw. transportiert werden. Zudem soll das Verfahren mit höherer Geschwindigkeit ablaufen können als dies bisher möglich war, ohne dass damit Nachteile hinsichtlich der Positionierungspräzision und/oder der Zuverlässigkeit der Manipulation der Stückgüter in Kauf zu nehmen sind. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

DE 44 39 728 A1 beschreibt ein Verfahren nach dem Oberbegriff des Anspruchs 1.

Diese Ziele der Erfindung werden mit dem Gegenstand des unabhängigen Anspruchs 1, d.h. mit einem Verfahren zum Umgang mit in mindestens einer Reihe hintereinander bewegten Stückgütern erreicht, welche die Merkmale des unabhängigen Anspruchs 1 umfasst. Merkmale vorteilhafter Weiterbildungen der Erfindung ergeben sich aus den abhängigen Ansprüchen

Die Erfindung bezieht sich auf ein Verfahren zum Umgang mit hintereinander bewegten Stückgütern, die in mindestens einer Reihe hintereinander bewegt werden. Auch eine taktweise Beförderung ist möglich, was nachfolgend noch genauer ausgeführt werden wird. Wenn also im Zusammenhang der vorliegenden Beschreibung nur noch von einem Verfahren, einer Verfahrensvariante, dem erfindungsgemäßen Verfahren o. dgl. die Rede ist, so ist damit generell das genannte Verfahren zum Umgang hintereinander bewegten Stückgütern gemeint, wahlweise mit in mindestens einer Reihe bewegten Stückgütern. Wenn hier, in den Ausführungsbeispielen, in den Ansprüchen und/oder im Zusammenhang mit der gesamten Beschreibungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung, seien dies in Transport- und/oder Förderrichtung nachgeordnete, vorgeordnete oder integrierte Teile der Vorrichtung.

Bei den Stückgütern kann es sich um hintereinander bewegte bzw. um in einer Reihe oder in mehreren Reihen hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Mit dem Begriff der geschlossenen Formation ist eine lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos-Formation transportiert werden, die keine Unterbrechung aufweist und eine beliebige Anzahl von Stückgütern umfasst. Aus dieser geschlossenen Formation wird wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht.

Bei dem erfindungsgemäßen Verfahren zum Umgang mit hintereinander bewegten Stückgütern, die zu einem Erfassungsbereich eines Manipulators transportiert werden, wird dort im Erfassungsbereich wenigstens ein transportiertes Stückgut mittels mindestens zwei, dem wenigstens einen Manipulator zugeordneten, gegenüberliegend angeordneten Klemm- und/oder Greifmitteln klemmend und/oder kraft- und/oder formschlüssig erfasst, von nachfolgenden Stückgütern räumlich abgetrennt und in eine definierte relative Zielposition und/oder -ausrichtung gegenüber den jeweils nachfolgenden Stückgütern gebracht. Bei diesem erfindungsgemäßen Verfahren ist einerseits vorgesehen, dass eine, durch das wenigstens eine, von den mindestens zwei Klemm- und/oder Greifmitteln des wenigstens einen Manipulators erfasste Stückgut definierte erste vertikale und in etwa senkrecht zu einer Transportrichtung der Stückgüter orientierte Symmetrieebene beabstandet ist von einer hierzu in etwa parallel ausgerichteten zweiten vertikalen Symmetrieebene, die durch den Manipulator bzw. durch dessen Klemm- und/oder Greifmittel definiert ist. Darüber hinaus ist bei dem Verfahren vorgesehen, dass in mindestens einem Schritt von mehreren zeitlich aufeinander folgenden Schritten jeweils wenigstens ein transportiertes Stückgut erfasst und durch eine Rotation um eine vertikale Achse mit einem Rotationswinkel von mindestens 90°, je nach Manipulationsphase jedoch wahlweise auch von ungefähr 180° von einer geradlinigen Bewegungsbahn in ursprünglicher Transportrichtung jeweils räumlich abgetrennt und in eine jeweilige definierte relative Zielposition und/oder -ausrichtung gegenüber nachfolgenden Stückgütern gebracht wird.

Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Bei dem erfindungsgemäßen Verfahren ist vorgesehen, dass in mehreren zeitlich aufeinanderfolgenden Schritten jeweils wenigstens ein transportiertes Stückgut aus der geschlossenen Formation erfasst, von der geschlossenen Formation durch geradlinige Beschleunigung in oder ungefähr in einer Längserstreckungsrichtung der geschlossenen Formation und/oder durch eine Rotation aus einer geradlinigen Bewegungsbahn der geschlossenen Formation jeweils räumlich abgetrennt und mittels mindestens eines Manipulators in eine jeweilige definierte relative Zielposition und/oder -ausrichtung gegenüber nachfolgenden Stückgütern gebracht wird. Hierbei wird dem wenigstens einem erfassten Stückgut gegenüber einer Transportgeschwindigkeit der geschlossenen Formation wenigstens eine weitere Geschwindigkeits- und/oder Richtungs- und/oder Drehbewegungskomponente aufgeprägt. Hierbei ist zu beachten, dass die Geschwindigkeitskomponente nicht negativ gegenüber der Geschwindigkeit der Stückgüter in der Formation sein darf und die Richtungskomponente nicht entgegen der Transportrichtung der Stückgüter in der Formation gerichtet sein darf. Ansonsten bestünde eine Kollisionsgefahr zwischen dem erfassten Stückgut und dem nachfolgenden, nunmehr zuvorderst befindlichen Stückgut der geschlossenen Formation. Zum Drehen des mindestens einen erfassten Stückgutes kann der Manipulator der Vorrichtung beispielsweise als Greiferkopf an einem Drehgelenk ausgebildet sein und durch Rotation um einen definierten Winkel von beispielsweise 90° die Ausrichtung der zwischen den Klemmbacken erfassten Stückgüter verändern.

Erfindungsgemäß ist bei dem Verfahren vorgesehen, dass das wenigstens eine transportierte Stückgut unter gleichzeitiger Drehbewegung um einen Winkel von zumindest näherungsweise 90° oder von zumindest näherungsweise 180° in die definierte relative Zielposition und/oder Zielausrichtung gegenüber den nachfolgenden Stückgütern gebracht wird.

Das Verfahren kann weiterhin vorsehen, dass die Drehbewegung um eine vorzugsweise in etwa vertikale Achse erfolgt, welche sich zwischen dem jeweiligen wenigstens einen klemmend und/oder kraft- und/oder formschlüssig erfassten Stückgut und der jeweiligen definierten Zielposition befindet.

Bei dem erfindungsgemäßen Verfahren wird vorgesehen, dass die Stückgüter in mindestens einer Reihe ohne jeweilige Abstände voneinander unmittelbar aufeinanderfolgend als geschlossene Formation in den Erfassungsbereich des Manipulators bewegt und dort von den mindestens zwei Klemm- und/oder Greifmitteln des Manipulators erfasst und unter räumlicher Abtrennung von den nachfolgenden Stückgütern der geschlossenen Formation in die jeweiligen definierten relativen Zielpositionen gebracht werden.

Das Verfahren kann darüber hinaus vorsehen, dass das jeweils vom Manipulator erfasste Stückgut bei Einleitung seiner Rotation um die vertikale Achse durch Distanzierung in Transportrichtung und durch zumindest kurzzeitige Beschleunigung mit einer Bewegungskomponente parallel zu einer geradlinigen Bewegungsbahn der transportierten Stückgüter bzw. der geschlossenen Formation von nachfolgenden Stückgütern räumlich abgetrennt und in Richtung einer jeweils definierten relativen Zielposition und/oder -ausrichtung gegenüber den nachfolgenden Stückgütern gebracht wird. Wie zuvor erwähnt, werden den erfassten Stückgütern oder Artikeln hierbei typischerweise gegenüber einer Transportgeschwindigkeit der geschlossenen Formation überlagerte weitere Geschwindigkeits- und/oder Richtungs- und/oder Drehbewegungskomponenten aufgeprägt.

Gemäß einer weiteren Verfahrensvariante kann es sinnvoll sein, den Manipulator bzw. dessen mindestens zwei Klemm- und/oder Greifmittel nach einer Rotation um eine vertikale Achse von etwa 180°, nach Erreichung einer jeweiligen Zielposition und/oder -ausrichtung sowie nach Freigabe des dort positionierten mindestens einen Stückgutes ohne Rückdrehung und/oder ohne weitere Rotation der mindestens zwei Klemm- und/oder Greifmittel wenigstens ein weiteres zu positionierendes und/oder neu auszurichtendes Stückgut von der Reihe bzw. der geschlossenen Formation erfassen zu lassen und anschließend dieses wenigstens eine erfasste Stückgut mit oder ohne Rotation des Manipulators bzw. der Klemm- und/oder Greifmittel um eine vertikale Achse in eine weitere Zielposition und/oder -ausrichtung innerhalb des Erfassungsbereiches zu verbringen. Insbesondere diese optionale Verfahrensvariante, bei welcher der Manipulator bei aufeinanderfolgenden Manipulationsschritten immer wieder um 180° weitergedreht werden kann, ohne dass zeit- und/oder platzraubende Rückdrehungen notwendig sind, erlaubt material- und zeitschonende Manipulationsabläufe, bei denen zudem die Bewegungsfolgen des Manipulators und/oder seiner Klemm- und/oder Greifmittel hinsichtlich des zur Verfügung stehenden Raumes innerhalb des Erfassungsbereichs und insbesondere hinsichtlich der Vermeidung aller störenden Kollisionen mit Stückgütern optimiert werden können. Jede eingesparte Rückdrehung des Manipulators bzw. seiner Klemm- und/oder Greifmittel ermöglicht eine engere Vorbeiführung an Stückgütern, ohne dass hierdurch eine Kollisionsgefahr besteht, da insbesondere bei Manipulatoren mit größeren Aufnahmekapazitäten für bspw. drei oder vier hintereinander angeordnete Stückgüter ein relativ großer Platzbedarf für allfällige Rotationsbewegungen der relativ ausladenden Klemm- und/oder Greifmittel beseht, was bei Rückdrehungen des Greiferkopfes um jeweils 180° nach jeder vorhergehenden Positionierung, die eine 180°-Drehung umfasste, zu einer deutlichen Erhöhung der Kollisionsgefahr mit im Erfassungsbereich befindlichen Stückgütern führte. Um diese Kollisionsgefahr auszuschließen, muss der Manipulator bei Rückbewegungen zur Aufnahme neuer Stückgüter an vorderer Position der nachtransportierten Reihe oder Formation größere Ausweichbewegungen machen, die zu einer unerwünschten Zeitverzögerung für die Rückbewegungen und -drehungen führen. Auch wenn in Beschreibung vorzugsweise von einer maximalen Aufnahmekapazität von drei Stückgütern je Manipulator gesprochen wird, so sind die genannten Überlegungen auch auf Manipulatoren mit geringerer oder größerer maximaler Aufnahmekapazität analog anwendbar.

Wie erwähnt, kann wenigstens ein zuvorderst transportiertes Stückgut aus der geschlossenen Formation klemmend und/oder kraft- und/oder formschlüssig erfasst und um einen Winkel von zumindest näherungsweise 90° oder von zumindest näherungsweise 180° um die Achse gedreht werden, wobei sich diese Achse insbesondere zwischen dem jeweiligen wenigstens einen klemmend und/oder kraft- und/oder formschlüssig erfassten Stückgut und der jeweiligen definierten Zielposition befinden kann. Es kann zudem optional vorgesehen sein, dass die Achse der Drehbewegung im Verlauf der Drehbewegung zumindest zeit- und/oder abschnittsweise in Richtung der jeweiligen definierten Zielposition bewegt wird. Wahlweise kann die Achse im Verlauf der Drehbewegung zumindest zeitweise in Richtung der jeweiligen definierten Zielposition mit einer Geschwindigkeit bewegt werden, die größer ist als eine Transportgeschwindigkeit der geschlossenen Formation. Außerdem kann es ggf. sinnvoll sein, dass die Achse im Verlauf der Drehbewegung zumindest zeitweise in einer bestimmten Position verweilt.

Eine weitere Ausführungsvariante des erfindungsgemäßen Verfahrens sieht vor, dass die Achse im Verlauf der Drehbewegung zumindest zeitweise in Richtung der jeweiligen definierten Zielposition mit einer Geschwindigkeit bewegt wird, die größer ist als die Transportgeschwindigkeit der geschlossenen Formation, wobei zeitlich anschließend die Achse im Verlauf der Drehbewegung zumindest zeitweise in einer bestimmten Position verweilt.

Das Verfahren kann wahlweise vorsehen, dass zeitlich aufeinander folgend mehrmals wenigstens ein transportiertes Stückgut aus der geschlossenen Formation klemmend und/oder formschlüssig erfasst, von der geschlossenen Formation räumlich abgetrennt und in eine jeweilige definierte relative Zielposition und/oder -ausrichtung gegenüber nachfolgenden Stückgütern gebracht wird, woraus resultierend aus mehreren Stückgütern eine Vorgruppierung oder eine Gruppierung für eine palettierfähige Lage oder Teillage gebildet wird.

Die Drehbewegungen des wenigstens einen Manipulators können bei wenigstens zwei aufeinanderfolgenden Schritten zum jeweiligen Verbringen von Stückgütern von der geschlossenen Formation in die jeweils vorgesehenen Zielpositionen und/oder Zielausrichtungen mit jeweils gleichsinnigem Drehsinn erfolgen, insbesondere oder wahlweise unter Weiterdrehung des Manipulators über einen Drehwinkel von 180° hinaus.

Das Verfahren kann als weitere Ergänzungsoption vorsehen, dass das wenigstens eine Stückgut oder die mehreren Stückgüter mittels eines als Deltakinematik-Roboter ausgebildeten Manipulators erfasst und in die jeweilige Zielposition und/oder Zielausrichtung gebracht wird bzw. werden.

Außerdem umfasst diese Offenbarung eine Vorrichtung zum Umgang mit hintereinander bewegten Stückgütern, wahlweise auch zum Umgang mit in mindestens einer Reihe von hintereinander bewegten Stückgütern. Diese Vorrichtung umfasst mindestens einen Manipulator mit Klemm- und/oder Greifmitteln zur Handhabung von Stückgütern sowie wenigstens eine Transporteinrichtung, über welche aufeinanderfolgende und/oder unmittelbar aufeinanderfolgende Stückgüter ohne, annähernd ohne Beabstandung oder auch mit dazwischen befindlichen Lücken in getaktetem Zulauf oder auch als geschlossene Formation in einen Erfassungsbereich des mindestens einen Manipulators transportierbar sind. Der mindestens eine Manipulator ist zum klemmenden und/oder kraft- und/oder formschlüssigen Erfassen bzw. Entgegennehmen sowie zum Abtrennen und Überführen in eine Zielposition und/oder -ausrichtung mindestens eines Stückgutes aus der mittels der wenigstens einen Transporteinrichtung in seinen Erfassungsbereich transportierten geschlossenen Formation bzw. von den in seinen Erfassungsbereich transportierten Stückgütern ausgebildet. Weiterhin ist bei der Vorrichtung vorgesehen, dass eine, durch das wenigstens eine, von den mindestens zwei Klemm- und/oder Greifmitteln des wenigstens einen Manipulators erfasste Stückgut definierte erste vertikale und in etwa senkrecht zu einer Transportrichtung der Stückgüter orientierte Symmetrieebene beabstandet ist von einer hierzu in etwa parallel ausgerichteten zweiten vertikalen Symmetrieebene, die durch den Manipulator bzw. durch dessen Klemm- und/oder Greifmittel definiert ist. Mit der Definition der voneinander beabstandeten vertikalen Symmetrieebenen ist insbesondere eine asynchrone Beladung des Manipulators bzw. eine unsymmetrische Erfassung von Stückgütern zwischen den Klemm- und/oder Greifmitteln des Manipulators gemeint, was auch eine Erfassung von weniger Stückgütern als der maximal erfassbaren Anzahl von Stückgütern bedeutet, die zudem außermittig bzw. einseitig im Manipulator verlagert erfasst werden.

Außerdem kann der mindestens eine Manipulator das wenigstens eine transportierte Stückgut zum Überführen in die definierte relative Zielposition und/oder -ausrichtung mit einer Drehbewegung um einen Winkel von zumindest näherungsweise 90° oder von zumindest näherungsweise 180° beaufschlagen. Hinzu kommt, dass der mindestens eine Manipulator für die Drehbewegung eine vorzugsweise in etwa vertikale Achse bereitstellt und zur gegenüber der Achse versetzten klemmenden und/oder kraft- und/oder formschlüssigen Entgegennahme des mindestens einen Stückgutes ausgebildet ist.

Die Vorrichtung kann alternativ oder zusätzlich zu den beschriebenen Merkmalen ein oder mehrere Merkmale und / oder Eigenschaften des zuvor beschriebenen Verfahrens umfassen. Ebenfalls kann das Verfahren alternativ oder zusätzlich einzelne oder mehrere Merkmale und / oder Eigenschaften der beschriebenen Vorrichtung aufweisen.

Eine Variante der Vorrichtung sieht vor, dass der mindestens eine Manipulator für die Drehbewegung eine Achse bereitstellt und zur gegenüber der Achse versetzten klemmenden und/oder formschlüssigen Entgegennahme des mindestens einen Stückgutes ausgebildet ist. Außerdem kann vorgesehen sein, dass der mindestens eine Manipulator zumindest zeitweise mit der Drehbewegung überlagert zusammen mit der Achse und dem jeweiligen klemmend und/oder formschlüssig entgegengenommenen mindestens einen Stückgut in Richtung der jeweiligen Zielposition bewegbar ausgebildet ist.

Wahlweise kann der mindestens eine Manipulator zumindest zeitweise mit der Drehbewegung überlagert zusammen mit der Achse und dem jeweiligen klemmend und/oder formschlüssig entgegengenommenen mindestens einen Stückgut in Richtung der jeweiligen Zielposition mit einer Geschwindigkeit bewegbar sein, wobei diese Geschwindigkeit größer ist als eine Transportgeschwindigkeit der geschlossenen Formation. Außerdem kann der mindestens eine Manipulator zum klemmenden und/oder kraft- und/oder formschlüssigen Entgegennehmen sowie zum Abtrennen und Überführen in eine Zielposition und/oder -ausrichtung einer bestimmten Anzahl jeweiliger in der geschlossenen Formation zuvorderst positionierter Stückgüter ausgebildet sein.

Der im Zusammenhang mit der vorliegenden Beschreibung verwendete Begriff des Manipulators meint im Wesentlichen eine Handhabungseinrichtung, die zum Greifen, Verschieben, Drehen und/oder Versetzen von Stückgütern, Artikeln oder Gebinden geeignet ist, und die bei einer besonders vorteilhaften Variante auf einem sog. Deltaroboter oder Parallelkinematik-Roboter basieren kann bzw. Teil eines solches sein, welcher in einer dreiarmigen Ausführung, wie sie in der Praxis zunehmend eingesetzt wird auch als Tripod bezeichnet werden kann. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei meist passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar gelagert und können allesamt angetrieben und mit separaten Antriebsmotoren ausgestattet sein. Drei mit dem Koppelelement und jeweils mit ihrem zugehörigen Oberarm verbundene Unterarme bilden in jeder Position ein Kraftdreieck, das sich nur bewegen lässt, wenn die drei Oberarme jeweils synchron bzw. gleichzeitig die für sie berechnete Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtungen, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme mit Hilfe einer Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme. Ähnliche Handhabungseinrichtungen mit Tripoden sind etwa aus der DE 10 2010 006 155 A1, aus der DE 10 2013 208 082 A1 sowie aus der US 8 210 068 B1 bereits bekannt.

Die bekannten Parallelkinematik-Roboter bzw. sog. Tripoden können einen für den jeweiligen Roboter verfügbaren Arbeitsraum abdecken, der sich aus der Länge der Oberarme, dem Abstand der Befestigung der Oberarme zum Mittelpunkt einer gestellfesten Basis, der Länge der Unterarme, dem Abstand der Befestigung der Unterarme zum Mittelpunkt des sog. Tool-Center-Points am Werkzeugträger und dem maximalen Schwenkbereich der Oberarme ergibt. Dieser Arbeitsraum ist bezogen auf den Tool-Center-Point in z-Richtung ein Zylinder, an dessen unteren Rand sich ein Kugelsegment anschließt. Ferner wird der Arbeitsraum am oberen Rand gegebenenfalls noch eingeschränkt durch maximale Schwenkwinkel kardanischer Teleskop-Antriebswellen. Dieser Arbeitsraum kann in etwa dem Erfassungsbereich entsprechen, kann aber auch kleiner oder größer als der sog. Erfassungsbereich im Sinne der vorliegenden Erfindung sein. Um die innerhalb des Erfassungsbereichs befindlichen Stückgüter erfassen, greifen und manipulieren zu können, ist es sinnvoll, den Arbeitsraum, in dem sich der TCP des Tripods bewegen kann, etwa größer als den Erfassungsbereich zu wählen.

Die bekannten Deltakinematik-Roboter bzw. "Tripode" besitzen eine hohe Genauigkeit und können darüber hinaus zur Handhabung der jeweiligen Stückgüter mit hoher Geschwindigkeit bewegt und verfahren werden. Um die jeweiligen Stückgüter entgegennehmen und nach der Handhabung bzw. Positionierung wieder freigeben zu können, weisen bekannte Tripode bewegbare und steuerbare Manipulatoren auf. So können diese Manipulatoren bspw. pneumatisch, hydraulisch oder elektrisch angesteuert werden, so dass hierzu mit dem entsprechenden Manipulator Leitungsverbindungen gekoppelt sind. Allerdings können diese Leitungsverbindungen geeignet sein, die Bewegungsfreiheit des Tripods einzuschränken. Zudem müssen die Leitungsverbindungen sicher verlegt werden, so dass das Risiko einer Beschädigung von Leitungsverbindungen bei Betrieb des Tripods ausgeschlossen werden kann. Nicht zuletzt aus diesem Grunde besitzen bisher eingesetzte Deltakinematik-Roboter aufgrund der umständlichen Koppelung zwischen einem Manipulator und einem zugeordneten Aktor einen komplexen Aufbau und eine teilweise eingeschränkte Bewegungsfreiheit.

Demgegenüber sieht die vorliegende Erfindung in einem weiteren Ausführungsbeispiel eine Vorrichtung zur Handhabung und/oder zum Manipulieren von Artikeln, Gruppierungen, Gebinden oder Stückgütern vor, die nachfolgend anhand verschiedener Ausführungsdetails beschrieben wird. Außerdem sieht eine Ausführungsvariante der Erfindung ein Verfahren zur Handhabung und/oder zum Manipulieren von Artikeln, Gruppierungen, Gebinden oder Stückgütern vor, das mit einer solchen Vorrichtung durchgeführt wird, die eine obere Aufhängung aufweist, an welcher wenigstens drei drehbar angetriebene Stellarme befestigt sind, wobei die wenigstens drei Stellarme jeweils aus wenigstens zwei relativ zueinander schwenkbaren Armabschnitten bestehen und unabhängig voneinander betätigt werden können. Die Vorrichtung umfasst weiterhin einen Manipulator, der ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann. Außerdem sieht die Vorrichtung eine Linearführung vor, die mit dem Manipulator und der Aufhängung über jeweils ein kardanisch wirkendes Gelenk in Verbindung steht, wobei die Linearführung als drehbare erste Welle ausgebildet ist, die mit dem Manipulator drehfest in Verbindung steht und wobei der Manipulator durch eine Rotationsbewegung der ersten Welle gemeinsam mit dieser Welle gedreht wird. Zudem ist eine als zweite Welle ausgebildete Betätigungseinrichtung vorgesehen, welche die Linearführung durchsetzt und über welche die ein oder mehreren Mittel zum temporären Greifen und Freigeben von Artikeln angesteuert werden können, wobei die als zweite Welle ausgebildete Betätigungseinrichtung zur Ansteuerung der ein oder mehreren Mittel relativ zur Linearführung gedreht wird, und wobei die zweite Welle bei einer Drehung der ersten Welle, die mit dem rotierbaren Manipulator drehfest in Verbindung steht, in Abhängigkeit von einem Status der Mittel zum temporären Greifen und Freigeben der Artikel entweder eine gleichsinnige, wahlweise eine synchrone Drehung mit der ersten Welle oder eine Ausgleichs- oder Gegendrehbewegung zu dieser ausführt.

Auf diese Weise kann sichergestellt werden, dass je nach Bedarf eine Drehung der ersten Welle, durch die der Manipulator gedreht wird, zur Aufrechterhaltung der Betätigung oder Freigabe der Mittel zum temporären Greifen und Freigeben der Artikel eine Ausgleichs- oder Gegendrehbewegung der zweiten Welle bedingt. Ebenso ist es dadurch ermöglicht, dass eine Drehung der ersten Welle, durch die der Manipulator gedreht wird, zur Änderung eines Betätigungs- oder Freigabestatus der Mittel zum temporären Greifen und Freigeben der Artikel eine gleichsinnige oder synchrone Drehbewegung der zweiten Welle bedingt.

Der Manipulator kann durch eine Rotationsbewegung der ersten Welle vorzugsweise um bis zu 360°, bevorzugt jedoch auch um mehr als 360° gedreht werden. Die als zweite Welle ausgebildete Betätigungseinrichtung kann insbesondere eine zur Linearführung ungefähr konzentrische Orientierung besitzen, wobei diese bei einer Positionierung des Manipulators über einen oder mehrere der wenigstens drei Stellarme durchgehend beibehalten wird. Durch die beschriebene Anordnung kann der Manipulator nahezu beliebig in jede gewünschte Drehrichtung rotieren, und zwar mit nahezu beliebigen bzw. unbeschränkten Drehwinkeln von Mehrfachen bzw. Vielfachen von 360°.

Außerdem kann eine Variante des erfindungsgemäßen Verfahrens vorsehen, dass die als zweite Welle ausgebildete Betätigungseinrichtung mit den ein oder mehreren Mitteln über ein Getriebe mit wenigstens einer Übersetzungsstufe in Verbindung steht, wobei das Getriebe ein Drehmoment der als zweiten Welle ausgebildeten Betätigungseinrichtung auf eine Stellbewegung der ein oder mehreren Mittel überträgt. Die die ein oder mehreren Mittel können bspw. wenigstens zwei gegenüberliegende Klemmbacken umfassen, die bei relativer Drehbewegung zwischen der als zweiten Welle ausgebildeten Betätigungseinrichtung und Linearführung relativ zueinander verfahren werden, wodurch Artikel, Stückgüter oder Gebinde gegriffen und verschoben, gedreht oder gehoben und versetzt werden können.

Wahlweise kann die wenigstens eine als zweite Welle ausgebildete Betätigungseinrichtung über einen separaten Aktor angesteuert werden, der drehfest auf der oberen Aufhängung aufsitzt.

Mit dieser Erfindungsvariante wird eine Möglichkeit geschaffen, bei Tripoden oder ähnlichen Robotern zusätzliche Antriebsmöglichkeiten in den sog. Tool-Center-Point bzw. in den Werkzeugträger einzubringen, ohne dass dies zu Nachteilen in der Betätigungslogik führen muss. Bei einer Ausführungsvariante, bei der zwischen dem Zentrum der Aufhängung und dem Tool-Center-Point zwei ineinander laufende Wellen angebracht sind, können zwei oder mehr Betätigungsmöglichkeiten bzw. Stellmöglichkeiten, bspw. in Form von Drehbewegungen, in den Tool-Center-Point übertragen werden. So kann zum Beispiel eine Drehbewegung einer Welle zum Schließen von Klemmbacken verwendet werden, während eine davon unabhängige Drehbewegung einer koaxialen Welle zum Drehen eines kompletten Greifers verwendet werden kann. Soll dabei jeweils nur eine Drehbewegung durchgeführt werden, so z.B. eine Drehung des Greifers, so öffnen oder schließen sich die Klemmbacken durch einen Stillstand der jeweils anderen Welle zur erstgenannten, da dadurch eine Relativbewegung zwischen den beiden Wellen erfolgt.

Gemäß einer Ausführungsvariante des erfindungsgemäßen Verfahrens muss die zweite Welle, welche zum Schließen und Öffnen des Greifers dient, bei einer Drehung des Greifers durch Betätigung der ersten Welle eine Ausgleichsbewegung durchführen. Diese Ausgleichsbewegung erfolgt als Relativbewegung gegenüber der ersten Welle im Gleichlauf, im Gegenlauf oder synchron. Die Richtung der Ausgleichsbewegung hat je nach gewünschter Funktion zu erfolgen. Werden z.B. die Greifer durch eine Drehbewegung entgegen dem Uhrzeigersinn geschlossen und der Greifer entgegen dem Uhrzeigersinn gedreht, so muss die zweite Welle bei der Drehung des Greifers ebenfalls eine Drehung entgegen dem Uhrzeigersinn durchführen, um zu verhindern, dass sich die Klemmbacken öffnen. Analog dazu ist eine Drehung im Uhrzeigersinn umzusetzen. Die erforderlichen Drehrichtungen der Wellen sind abhängig von der technischen Ausführung der Umsetzung der Drehbewegung der zweiten Welle in eine Linearbewegung der Klemmbacken. Insgesamt kann durch das Durchführen einer Ausgleichsbewegung die gewünschte Funktion des Werkzeuges, z.B. des Greifers, erreicht und gewährleistet werden.

Bei bevorzugten Ausführungsformen können die Stückgüter oder Artikel während ihrer Handhabung auf einer Horizontalfördereinrichtung transportiert werden und hierbei vom Manipulator gegriffen werden. Nach dem Greifen kann der Manipulator ein Drehen und/oder einen seitlichen Versatz schräg zur Transportrichtung der Horizontalfördereinrichtung und/oder eine Verzögerung und/oder Beschleunigung der jeweiligen gegriffenen Artikel gegenüber einer Transportgeschwindigkeit der Horizontalfördereinrichtung bewirken.

Jedem der wenigsten drei Stellarme der Vorrichtung kann zum Zwecke seines jeweiligen Antriebs ein eigener Aktor zugeordnet sein, der bevorzugt als Elektromotor ausgebildet ist und eine drehende Bewegung der Stellarme bewirkt. Die Stellarme können direkt an ihren jeweils zugeordneten Aktor angeflanscht sein. Die Aktoren können von der oberen Aufhängung getragen werden. Insbesondere kann es sein, dass die Aktoren hierbei hängend an der oberen Aufhängung angeordnet sind. Die Drehachsen der wenigstens drei Stellarme können parallel zueinander verlaufen. Die Aktoren der wenigsten drei Stellarme können mit einer Steuerungseinheit in Verbindung stehen, welche eine Bewegung eines oder mehrerer der wenigstens drei Stellarme zur bestimmten Positionierung des nachfolgend noch näher beschriebenen Manipulators vorgibt.

Der zuvor bereits erwähnte Manipulator der erfindungsgemäßen Vorrichtung umfasst ein oder mehrere Mittel zum Greifen der Artikel und ist mit den wenigstens drei Stellarmen mechanisch gekoppelt. Hierbei kann sinnvollerweise den wenigstens drei Stellarmen und dem Manipulator jeweils wenigstens ein Gelenk zwischengeordnet sein. So kann durch eine Bewegung eines oder mehrerer der wenigstens drei Stellarme eine Position des Manipulators vorgegeben werden. In besonders bevorzugten Ausführungsformen sind die wenigstens drei Stellarme mit einem Tragring gelenkig verbunden, welcher um die Linearführung sowie eine als Welle ausgebildete Betätigungseinrichtung geführt ist und mit dem Manipulator mechanisch gekoppelt in Verbindung steht. Die mechanische Koppelung zwischen dem Tragring und dem Manipulator kann eine relative Verdrehung des Manipulators gegenüber dem Tragring erlauben.

Auch kann eine Ausführungsvariante der erfindungsgemäßen Vorrichtung eine Linearführung umfassen, die mit dem Manipulator und der Aufhängung über jeweils ein kardanisch wirkendes Gelenk in Verbindung steht. Die Position der Linearführung kann in besonders bevorzugten Ausführungsformen derart gewählt sein, dass sich die Linearführung zwischen sämtlichen der wenigstens drei Stellarme befindet bzw. dass sämtliche der wenigstens drei Stellarme um die Linearführung angeordnet sind. Das jeweilige kardanisch wirkende Gelenk kann in einfachen Ausführungsformen als Kardangelenk ausgebildet sein. Der Begriff ist jedoch breit zu verstehen, so dass beispielsweise auch Kugelgelenke und/oder weitere kardanisch wirkende Gelenke im Rahmen denkbarer Ausführungsformen der erfindungsgemäßen Vorrichtung vorgesehen sein können.

Zudem ist mindestens eine Betätigungseinrichtung als Bestandteil der Vorrichtung vorgesehen. Über diese mindestens eine Betätigungseinrichtung können die ein oder mehreren Mittel zum temporären Greifen und Freigeben von Artikeln angesteuert werden. Die ein oder mehreren Mittel können hierzu mit der mindestens einen Betätigungseinrichtung in mechanischem Eingriff stehen. Normalerweise ist die mindestens eine Betätigungseinrichtung als Welle ausgebildet, welche die Linearführung durchsetzt und für die Ansteuerung der ein oder mehreren Mittel relativ zur Linearführung gedreht werden kann. In besonders bevorzugten Ausführungsformen kann die als Welle ausgebildete mindestens eine Betätigungseinrichtung die Linearführung vollständig durchsetzen. Zur drehenden Bewegung der als Welle ausgebildeten mindestens einen Betätigungseinrichtung kann der als Welle ausgebildeten mindestens einen Betätigungseinrichtung ein eigener Aktor zugeordnet sein, welcher ggf. mit der vorherig bereits erwähnten Steuerungseinheit in Verbindung steht. Durch eine solche Anordnung der als Welle ausgebildeten Betätigungseinrichtung und eine Ansteuerung der ein oder mehreren Mittel über eine Drehbewegung der Welle relativ zur Linearführung besteht die Möglichkeit, auf umständliche Leitungsverbindungen im Bereich des Manipulators zu verzichten.

Weiterhin ist es sinnvoll, die Linearführung und die als Welle ausgebildete Betätigungseinrichtung konzentrisch zueinander anzuordnen. Die konzentrische Anordnung zwischen der wenigstens einen als Welle ausgebildeten Betätigungseinrichtung und der Linearführung kann auch bei Positionierung des Manipulators bzw. bei Bewegung der wenigsten drei Stellarme durchgehend beibehalten werden.

Wahlweise kann die Linearführung wenigstens zwei teleskopierbare bzw. teleskopierbar miteinander verbundene Gehäuseteile umfassen, wobei diese wenigstens zwei teleskopierbar miteinander verbundenen Gehäuseteile von der mindestens einen als Welle ausgebildeten Betätigungseinrichtung durchsetzt werden. Für den angesprochenen Fachmann ist klar, dass in denkbaren weiteren Ausführungsformen die Linearführung auch aus drei, vier oder mehr als vier teleskopierbaren bzw. teleskopierbar miteinander in Verbindung stehenden Gehäuseteilen gebildet sein kann. Insbesondere können die wenigstens zwei teleskopierbaren Gehäuseteile jeweils zumindest abschnittsweise eine hohlzylindrische Formgebung besitzen.

Wie bereits erwähnt, kann der als Welle ausgebildeten Betätigungseinrichtung wahlweise ein eigener Aktor zugeordnet sein, über welchen die Welle angesteuert bzw. gedreht werden kann. Denkbar ist hierbei, dass der eigene Aktor an und/oder im Bereich der oberen Aufhängung positioniert ist. Beispielsweise kann eine Drehachse der Welle durch den eigenen Aktor und/oder durch einen Schwerpunkt des Aktors verlaufen. Der Aktor kann somit ggf. über ein zwischengeordnetes kardanisch wirkendes Gelenk an die mindestens eine als Welle ausgebildete Betätigungseinrichtung angeflanscht sein. Insbesondere kann der Aktor drehfest mit der oberen Aufhängung in Verbindung stehen.

Bei weiteren Ausführungsformen kann die Linearführung als weitere Welle ausgebildet sein, die mit dem Manipulator drehfest in Verbindung steht, so dass durch eine Rotationsbewegung der weiteren Welle der Manipulator gedreht werden kann. Insbesondere können hierbei die wenigstens eine als Welle ausgebildete Betätigungseinrichtung sowie die als weitere Welle ausgebildete Linearführung unabhängig voneinander gedreht werden. Weiter können die wenigstens eine als Welle ausgebildete Betätigungseinrichtung sowie die als weitere Welle ausgebildete Linearführung in etwa ineinander fallende oder nahe beieinander liegende Drehachsen besitzen.

Zudem können die ein oder mehreren Mittel wenigstens zwei gegenüberliegende Klemmbacken umfassen, deren relativer Abstand zum Greifen und Freigeben von Artikeln über die mindestens eine als Welle ausgebildete Betätigungseinrichtung vorgegeben werden kann. Beispielsweise kann es sein, dass lediglich eine der gegenüberliegenden Klemmbacken über die wenigstens eine als Welle ausgebildete Betätigungseinrichtung aktiv bewegt wird, wohingegen keine aktive Bewegung der jeweiligen gegenüberliegenden Klemmbacke über die wenigstens eine Betätigungseinrichtung bewirkt wird. In denkbaren weiteren Ausführungsformen kann die Vorrichtung ein oder mehrere Übertragungselemente besitzen, welche eine rotierende Bewegung der wenigstens einen als Welle ausgebildeten Betätigungseinrichtung in eine aktive Verstellung sämtlicher der wenigstens zwei gegenüberliegenden Klemmbacken überführen. Die jeweiligen Stückgüter oder Artikel können mittels der Klemmbacken erfasst, gegriffen und nachfolgend durch eine Bewegung des Manipulators versetzt und positioniert und/oder ausgerichtet werden. Wie an anderen Stellen mehrfach erwähnt, werden hierbei die Stückgüter in aller Regel auf der Horizontalfördereinrichtung bzw. innerhalb des Erfassungsbereiches transportiert, durch die Vorrichtung bzw. den Manipulator erfasst und gegriffen und auf der Horizontalfördereinrichtung verschoben, versetzt, positioniert und/oder neu ausgerichtet. Wahlweise können die Stückgüter oder Artikel hierbei gegenüber einer Transportgeschwindigkeit der Horizontalfördereinrichtung verzögert oder beschleunigt und ggf. gedreht und/oder schräg zu einer Förderrichtung der Horizontalfördereinrichtung versetzt werden.

Weiter kann der als Welle ausgebildeten mindestens einen Betätigungseinrichtung und den ein oder mehreren Mitteln ein Getriebe mit wenigstens einer Übersetzungsstufe zwischengeordnet sein. Hierdurch kann die Ansteuerung der ein oder mehreren Mittel zum Greifen von Artikeln mit hoher Genauigkeit erfolgen, wobei das über die Welle zum Greifen von Artikeln aufzubringende Drehmoment gering gehalten werden kann.

Die Vorrichtung mit dem Deltakinematik-Roboter zur Steuerung, Bewegung und Handhabung des erwähnten Manipulators eignet sich für zahlreiche Ausführungsvarianten des erfindungsgemäßen Verfahrens zur Handhabung von Stückgütern, Artikeln, Gebinde oder dergleichen. Hierbei können Merkmale, welche vorhergehend zu diversen Ausführungsformen der Vorrichtung beschrieben wurden, bei denkbaren Ausführungsformen des erfindungsgemäßen Verfahrens vorgesehen sein. Auch können Merkmale, welche nachfolgend zu diversen Ausführungsformen des erfindungsgemäßen Verfahrens beschrieben werden, bei denkbaren Ausführungsformen der Vorrichtung vorgesehen sein.

Die nachfolgend beschriebenen Varianten des erfindungsgemäßen Verfahrens werden mit einer Vorrichtung umgesetzt, welche eine obere Aufhängung umfasst, an der wenigstens drei drehbar angetriebene Stellarme befestigt sind. Die wenigstens drei Stellarme bestehen jeweils aus wenigstens zwei relativ zueinander schwenkbaren Armabschnitten und können unabhängig voneinander betätigt bzw. unabhängig voneinander verstellt werden. Die jeweilige Verstellung kann über eine Steuerungseinheit vorgegeben werden. Weiter besitzt die Vorrichtung, die zur Umsetzung des erfindungsgemäßen Verfahrens geeignet ist, einen Manipulator, welcher ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann. Auch kann diese Vorrichtung eine Linearführung umfassen, die mit dem Manipulator und der Aufhängung über jeweils ein kardanisch wirkendes Gelenk in Verbindung steht. Hinzu kommt mindestens eine als Welle ausgebildete Betätigungseinrichtung welche die Linearführung durchsetzt, insbesondere in ungefähr koaxialer Anordnung. Somit ist die als Welle ausgebildete Betätigungseinrichtung zumindest abschnittsweise in der Linearführung aufgenommen. Weiter können über die mindestens eine als Welle ausgebildete Betätigungseinrichtung die ein oder mehreren Mittel zum temporären Greifen und Freigeben von Artikeln angesteuert werden, wobei die als Welle ausgebildete Betätigungseinrichtung zur Ansteuerung der ein oder mehreren Mittel relativ zur Linearführung gedreht wird.

In besonders bevorzugten Ausführungsformen kann die Linearführung als weitere Welle ausgebildet sein, die mit dem Manipulator drehfest in Verbindung steht. Der Manipulator kann durch eine Rotationsbewegung der weiteren Welle gemeinsam mit der weiteren Welle gedreht werden. Bei einer Rotationsbewegung der weiteren Welle kann somit der Manipulator mit der Welle um den gleichen Drehwinkel gedreht werden.

Weiter kann es sein, dass der Manipulator durch eine Rotationsbewegung der weiteren Welle um 360° und/oder mehr als 360° gedreht wird. Sofern Artikel mittels des Manipulators um etwas mehr als 180° gedreht werden sollen, kann es sinnvoll sein, nach Freigabe der Artikel den Manipulator mit gleicher Drehrichtung um insgesamt 360° weiter zu drehen und hierbei in die ursprüngliche Drehposition zurückzuführen. Bei Ausführungsformen mit möglicher Drehung des Manipulators um 360° ist das Verfahren mit erhöhtem Durchsatz einer Handhabung von Artikeln durchführbar. Hierbei kann vorgesehen sein, dass im Rahmen des Verfahrens der Manipulator lediglich in einer Drehrichtung gedreht wird, während durchgehend kein Drehen mit umgekehrter Drehrichtung erfolgt.

Insbesondere kann die als Welle ausgebildete Betätigungseinrichtung eine zur Linearführung koaxiale Orientierung besitzen und diese bei einer Positionierung des Manipulators über einen oder mehrere der wenigstens drei Stellarme durchgehend beibehalten. Sofern die Linearführung als weitere Welle ausgebildet ist, können die weitere Welle und die als wenigstens eine Welle ausgebildete Betätigungseinrichtung ineinander fallende oder in etwa ineinander fallende Drehachsen besitzen.

Zudem kann vorgesehen sein, dass die als Welle ausgebildete Betätigungseinrichtung mit den ein oder mehreren Mitteln über ein Getriebe mit wenigstens einer Übersetzungsstufe in Verbindung steht, wobei das Getriebe ein Drehmoment der als Welle ausgebildeten Betätigungseinrichtung auf eine Stellbewegung der ein oder mehreren Mittel überträgt.

In besonders bevorzugten Ausführungsformen können die ein oder mehreren Mittel wenigstens zwei sich gegenüberliegende Klemmbacken umfassen, die bei relativer Drehbewegung zwischen Welle und Linearführung relativ zueinander verfahren bzw. bewegt werden. Jede der Klemmbacken kann über biegeweiche Kontaktelemente verfügen, die bei Greifen von Artikeln mit den jeweiligen Artikeln kraftbeaufschlagt in Anlage gesetzt werden.

Auch kann es sein, dass die wenigstens eine als Welle ausgebildete Betätigungseinrichtung über einen Aktor angesteuert wird, der drehfest auf der oberen Aufhängung aufsitzt.

Wie bei allen Ausführungsformen können die Stückgüter während ihrer Handhabung auf einer Horizontalfördereinrichtung transportiert werden und hierbei vom Manipulator gegriffen werden. Nach Greifen kann der Manipulator ein Drehen und/oder einen seitlichen Versatz schräg zur Transportrichtung der Horizontalfördereinrichtung und/oder eine Verzögerung und/oder Beschleunigung der jeweiligen gegriffenen Artikel gegenüber einer Transportgeschwindigkeit der Horizontalfördereinrichtung bewirken.

Ergänzend sei erwähnt, dass die erfindungsgemäße Vorrichtung vorzugsweise mit einer Steuerungseinrichtung ausgestattet sein kann, über welche der mindestens eine Manipulator zum klemmenden und/oder kraft- und/oder formschlüssigen Erfassen des mindestens einen Stückgutes, zum räumlichen Abtrennen des mindesten seinen Stückgutes von der geschlossenen Formation sowie zum Verbringen des mindestens einen Stückgutes in die definierte Zielposition und/oder Zielausrichtung ansteuerbar ist, wobei die Steuerungseinrichtung Informationen zu einer aus einer Vielzahl an Stückgütern zu bildenden Vorgruppierung oder Gruppierung für eine palettierfähige Lage oder Teillage aufweist bzw. abgespeichert hat, und wobei die jeweiligen Zielpositionen und/oder - ausrichtungen der Stückgüter einen Teil der Informationen bilden und dem jeweiligen mindestens einen Stückgut eine bestimmte Lage und/oder relative Orientierung in der jeweiligen Gruppierung zuordnen.

Zudem umfasst eine weitere Ausführungsvariante der erfindungsgemäßen Vorrichtung wenigstens eine Horizontalfördereinrichtung, auf der das mindestens eine Stückgut bzw. die mehreren Stückgüter oder die Vielzahl an Stückgütern in die jeweiligen Zielpositionen und/oder Zielausrichtungen gelangen. Diese wenigstens eine Horizontalfördereinrichtung ist vorzugsweise unterbrechungsfrei und/oder mit konstanter Vorschubgeschwindigkeit angetrieben. Außerdem kann vorgesehen sein, dass die wenigstens eine, vorzugsweise unterbrechungsfrei angetriebene Horizontalfördereinrichtung unmittelbar an die Transporteinrichtung anschließt, so dass die Stückgüter ruck- und unterbrechungsfrei von der Transporteinrichtung an die unmittelbar anschließende Horizontalfördereinrichtung übergeben und dort weiterbefördert werden können. Die mindestens eine Transporteinrichtung kann beispielsweise durch mindestens ein Zuförderband oder eine Mehrzahl von parallelen Zuförderbändern gebildet sein, die vorzugsweise unmittelbar an die Horizontalfördereinrichtung münden und insbesondere einen ersten Transportbereich bilden. Von Vorteil ist es in diesem Zusammenhang, wenn die Geschwindigkeit der wenigstens einen, vorzugsweise unterbrechungsfrei angetriebenen Horizontalfördereinrichtung und die Transportgeschwindigkeit der Transporteinrichtung näherungsweise übereinstimmen oder exakt übereinstimmen.

Bei Zuförderung der Stückgüter in einer zumindest weitgehend lückenlosen Formation erfolgt in dem ersten Transportbereich- und im Gegensatz zum bekannten Stand der Technik - normalerweise keine Vorgruppierung bzw. Taktbildung der Stückgüter, sondern diese erfolgt gleichzeitig mit der Positionierung durch Erfassen, Verschieben und/oder Drehen, Erreichen der Zielpositionen und/oder Zielausrichtungen und anschließendes Lösen des Manipulators von den jeweils positionierten und/oder ausgerichteten Stückgütern innerhalb des sogenannten Gruppiermoduls, das insbesondere durch die Horizontalfördereinrichtung und den oberhalb der Horizontalfördereinrichtung angeordnete mindestens eine Manipulator gebildet wird. Aus der gesamten Beschreibung wird somit deutlich, dass bei einer lückenlosen Zuförderung eine Vorgruppierung im herkömmlichen Sinne, die sich von dem Vorgang der Lagenbildung deutlich erkennen und/oder abgrenzen ließe, gar nicht stattfindet, sondern im Bewegungsverlauf zwischen der Abtrennung der jeweiligen Stückgüter von der Formation und der Erreichung der Zielpositionen aufgelöst ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figur 1 zeigt schematisch die Zusammenstellung von Stückgütern als insbesondere stapel- und/oder palettierfähige Lage.

Figuren 2 bis 44 zeigen schematisch einen zeitlichen Ablauf eines erfindungsgemäßen Verfahrens zum Umgang mit in zwei parallelen Reihen hintereinander bewegten Stückgütern durch eine entsprechende Handhabungsvorrichtung zum Vorbereiten einer Lage von Stückgütern gemäß Figur 1.

Figuren 45, 46 und 47 zeigen in verschiedenen Gesamt- bzw. Detailansichten eine Ausführungsvariante eines Deltakinematik-Roboters, der mit einem Manipulator im Sinne der vorliegenden Erfindung zum Umgang mit und/oder zur Handhabung von Stückgütern ausgestattet ist.

Für gleiche oder gleich wirkende Elemente der Erfindung werden jeweils identische Bezugszeichen verwendet. Ferner werden der Übersicht halber nur Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung bzw. der erfinderischen Gedanken dar.

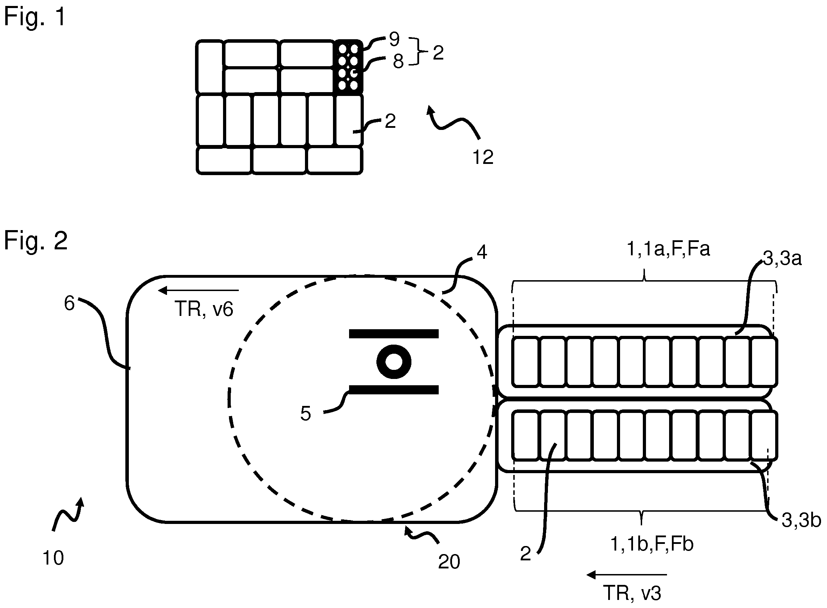

Figur 1 zeigt schematisch die Zusammenstellung von Stückgütern 2 als Lage 12, wie sie beispielsweise für die Palettierung und weitere Verarbeitung zusammengestellt werden soll. Im dargestellten Ausführungsbeispiel werden die Stückgüter 2 durch jeweils acht Flaschen 8 gebildet, die mittels einer Schrumpffolie 9 zu Gebinden zusammenfasst sind.

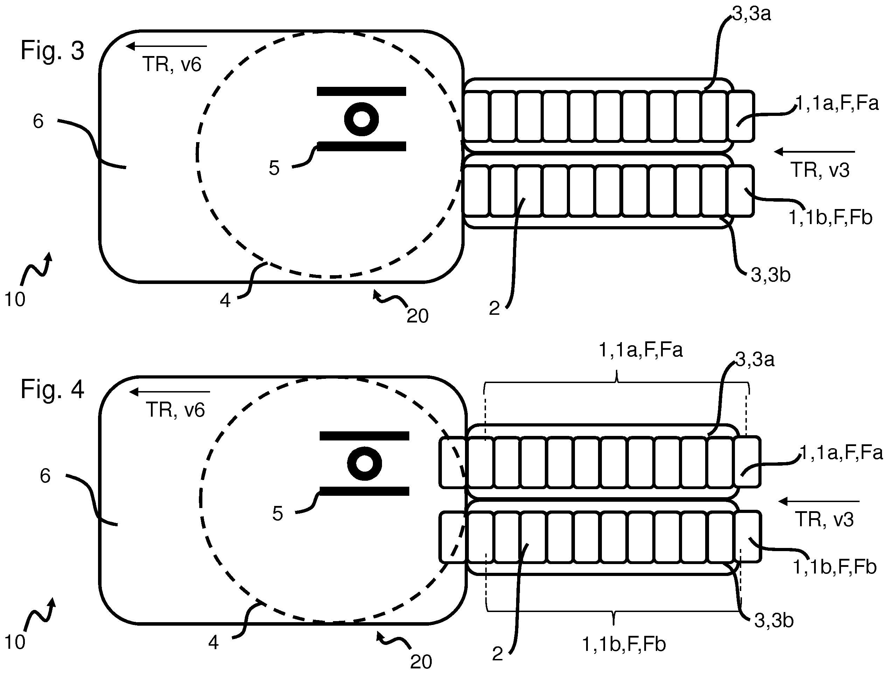

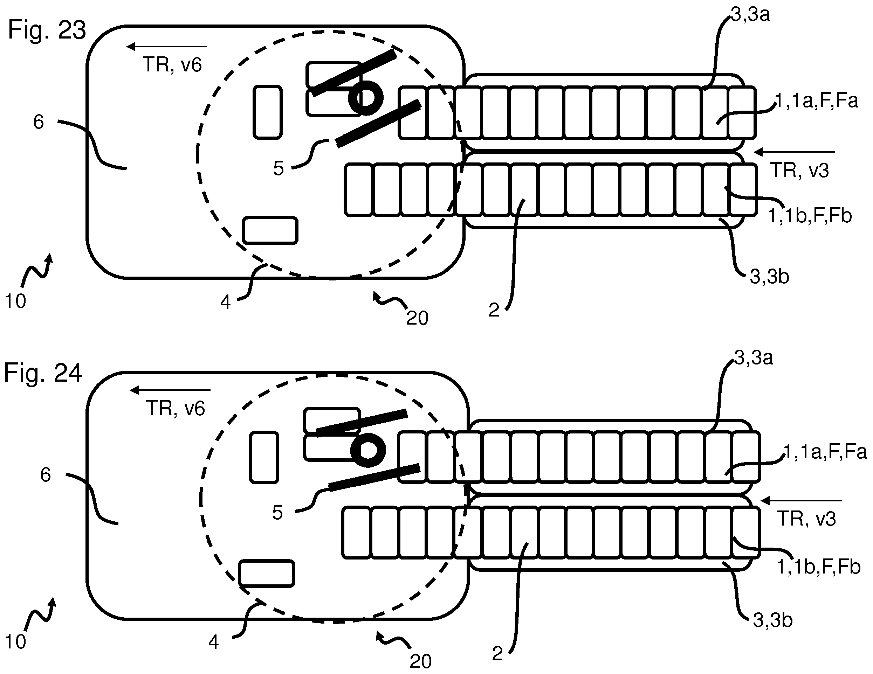

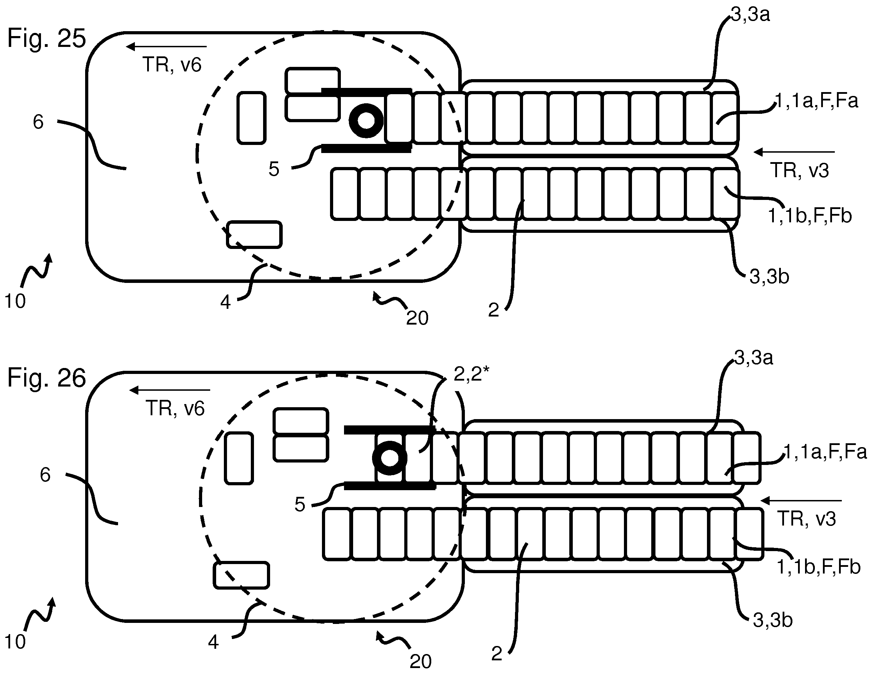

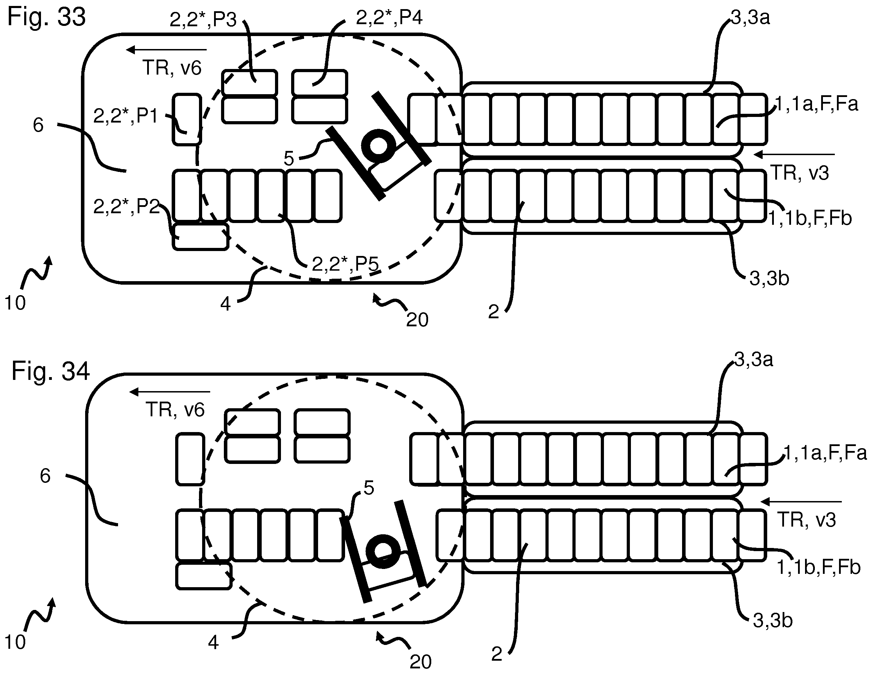

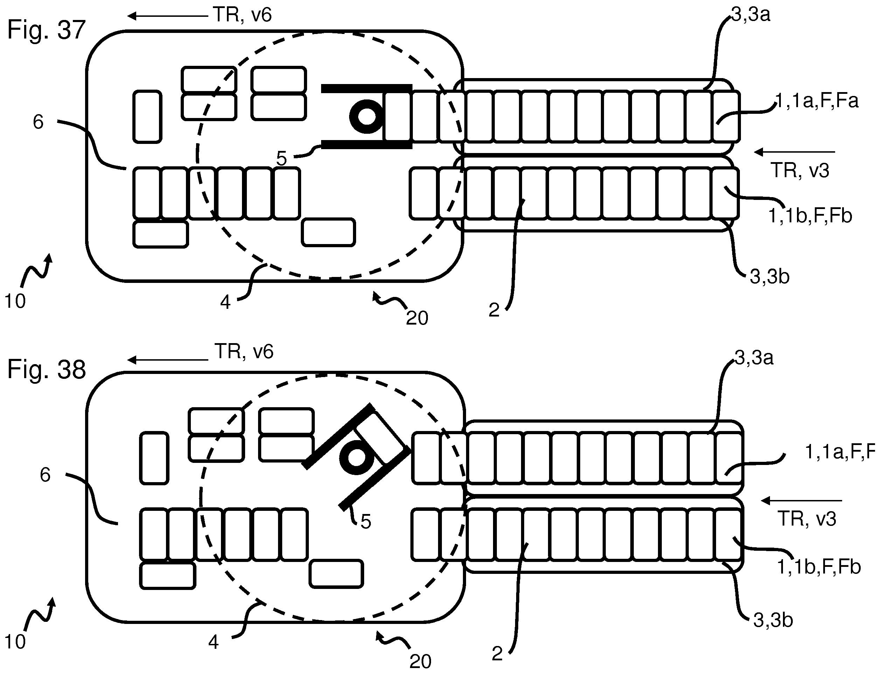

Figuren 2 bis 44 zeigen schematisch einen zeitlichen Ablauf eines erfindungsgemäßen Verfahrens zum Umgang mit in zwei parallelen Reihen 1, 1a, 1b hintereinander bewegten Stückgütern 2 durch eine entsprechende Handhabungsvorrichtung 10 zum Vorbereiten einer Lage 12 von Stückgütern 2 gemäß Figur 1.

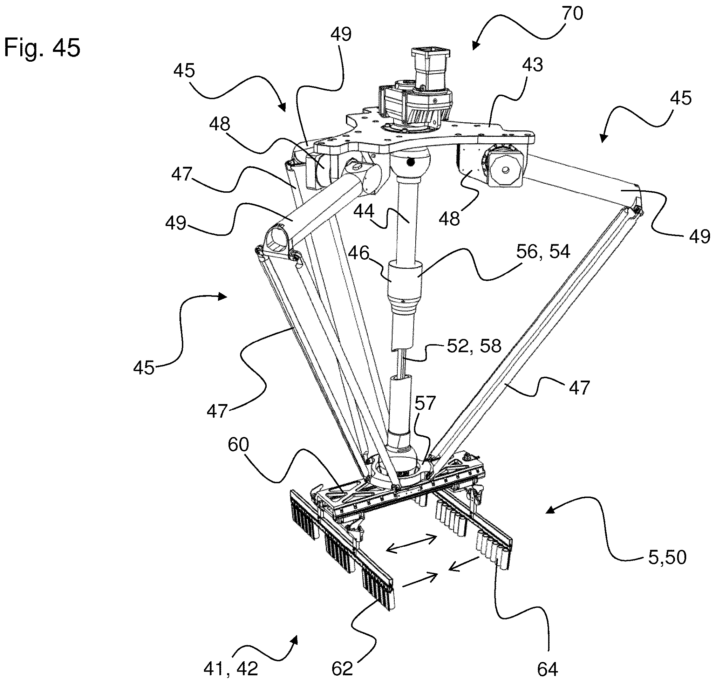

Figur 45 zeigt eine schematische Perspektivansicht einer Ausführungsform einer Handhabungs- und/oder Manipulationsvorrichtung zur Durchführung einer Variante oder mehrerer Varianten des erfindungsgemäßen Verfahrens.

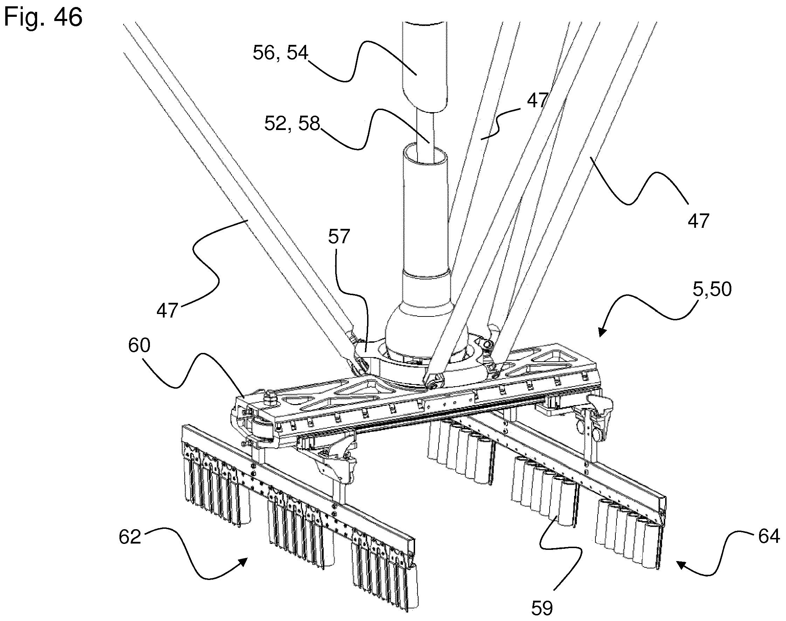

Figur 46 zeigt eine schematische Detailansicht eines unteren Teils der Vorrichtung aus Figur 45.

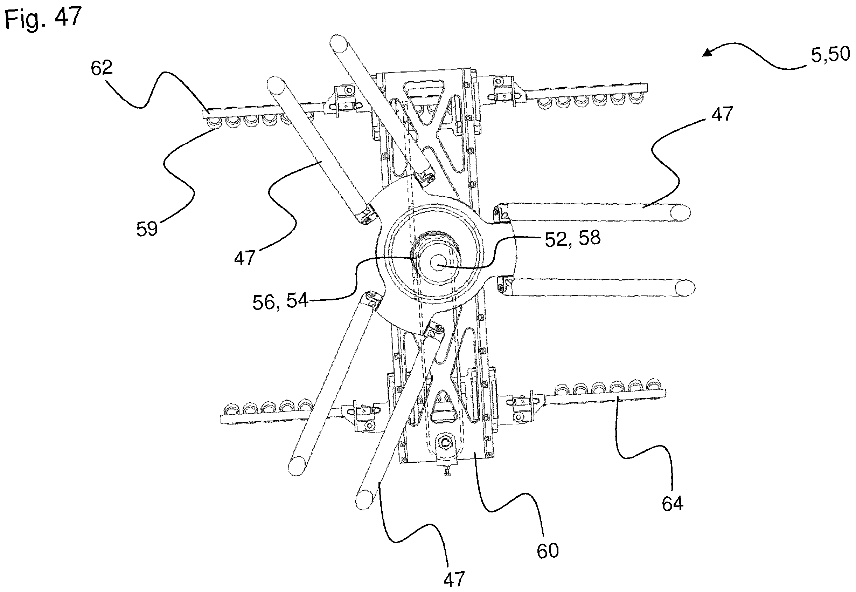

Figur 47 zeigt eine schematische Querschnittsdarstellung durch die Vorrichtung aus dem Ausführungsbeispiel gemäß Figur 45 und Figur 46.

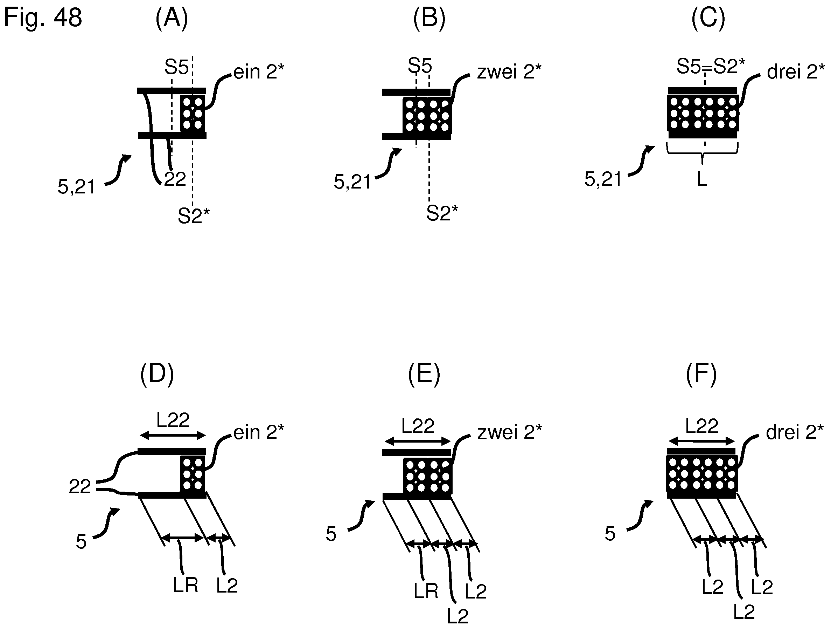

Figur 48A bis 48F zeigen das Erfassen einer unterschiedlichen Anzahl von Stückgütern durch einen Manipulator der Handhabungsvorrichtung.

Die Handhabungsvorrichtung 10 umfasst zwei parallel angeordnete erste Transporteinrichtungen 3, 3a, 3b, über welche unmittelbar aufeinanderfolgende Stückgüter 2 in einer zwei parallelen Reihen 1, 1a, 1b unterbrechungsfrei und/oder mit kontinuierlicher Transportgeschwindigkeit v3 in einen Erfassungsbereich 4 mindestens eines beweg-, verschieb- und/oder rotierbaren Manipulators 5 der Handhabungsvorrichtung 10 transportiert werden. Insbesondere ist vorgesehen, dass den zwei parallelen ersten Transporteinrichtungen 3a, 3b genau ein Erfassungsbereich 4 eines Manipulators 5 der Handhabungsvorrichtung 10 zugeordnet ist. Die Transporteinrichtungen 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in jeder der Reihen 1a, 1b jeweils in einer sogenannten geschlossenen Formation F, Fa, Fb wie in den Figuren 2ff. dargestellt, insbesondere gut sichtbar in den Figuren 2 bis 7, kontinuierlich in den Erfassungsbereich 4 des Manipulators 5 ein.

Die Figuren 2 bis 42 verdeutlichen insbesondere den in Transportrichtung TR lückenlos weitergeführten Transport der Reihen 1, 1a, 1b bzw. Formationen F, Fa, Fb im Erfassungsbereich 4 der Handhabungsvorrichtung 10. Insbesondere werden die Stückgüter 2 der jeweiligen Reihe 1a, 1b im Erfassungsbereich 4 ohne Unterbrechung und mit unveränderter Transportgeschwindigkeit weitertransportiert. Dem Erfassungsbereich 4 ist insbesondere eine Horizontalfördereinrichtung 6 zugeordnet, die sich mit einer Geschwindigkeit v6 bewegt. Insbesondere entspricht die Geschwindigkeit v6 der Horizontalfördereinrichtung 6 der Transportgeschwindigkeit v3 der Transporteinrichtungen 3a, 3b. Die in parallelen Reihen 1a, 1b über die Transporteinrichtungen 3a, 3b ankommenden Stückgüter 2 werden durch den Staudruck der nachfolgenden Stückgüter 2 auf die Horizontalfördereinrichtung 6 übergeschoben und dort unterbrechungsfrei weiter befördert.

Weiterhin ist möglich, dass die Stückgüter 2 mehrreihig, insbesondere in mehreren Parallelreihen 1a, 1b, auf einer einzigen, gemeinsamen Transporteinrichtung 3 (nicht dargestellt) zum Erfassungsbereich 4 des Manipulators 5 hin transportiert werden. Die Parallelreihen 1a, 1b können dabei beabstandet zueinander oder weitgehend ohne Abstand zueinander auf der Transporteinrichtung 3 transportiert werden.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet.

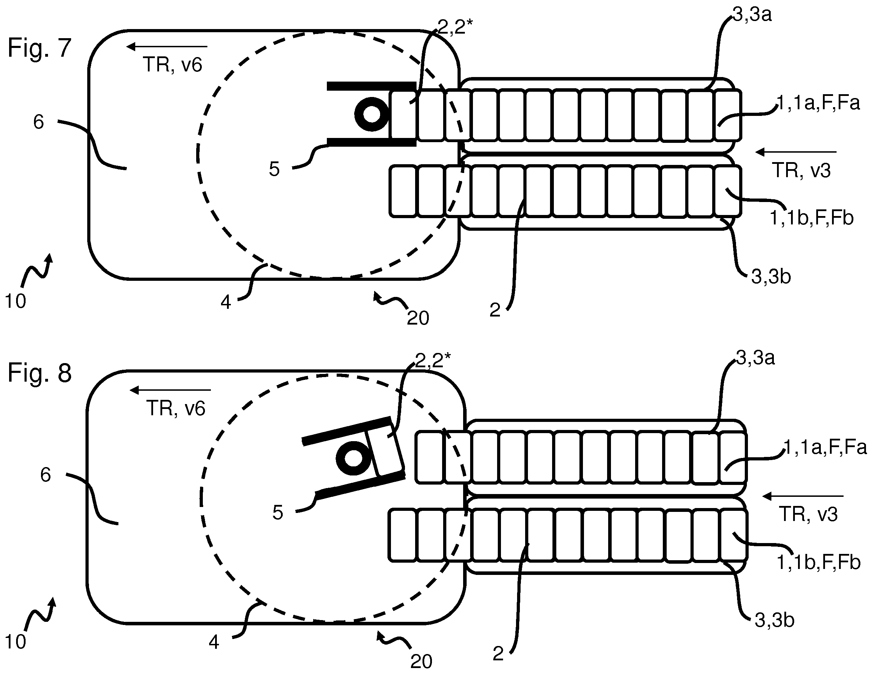

Der Manipulator 5 ist zum klemmenden und/oder kraft- und/oder formschlüssigen Entgegennehmen von Stückgütern 2, 2* innerhalb des Erfassungsbereichs 4 ausgebildet. Wie in Figur 7 dargestellt, greift der Manipulator 5 zuerst ein Stückgut 2 aus der über die Transporteinrichtung 3a einlaufenden geschlossenen Formation Fa. Die vom Manipulator 5 erfassten Stückgüter 2 werden nachfolgend zur Unterscheidung von den in Formation F angeordneten Stückgütern 2 mit dem Bezugszeichen 2* bezeichnet. Der Manipulator 5 trennt das erfasste Stückgut 2* von der einreihigen Formation Fa ab und überführt das abgetrennte Stückgut 2* wie in den Figuren 7 bis 11 dargestellt in eine erste Zielposition P1 und/oder Zielausrichtung. Dabei wird das erfasste Stückgut 2* durch den Manipulator 5 zum einen in Transportrichtung TR von der Formation Fa der Stückgüter 2 beabstandet, zudem wird das erfasste Stückgut 2* gegenüber den Stückgütern 2 der Formation Fa verdreht.

Gemäß den in den Figuren 7 bis 11 dargestellten Verfahrensschritten wird das wenigstens eine zuvorderst einlaufende Stückgut 2 aus der geschlossenen Formation Fa erfasst und unter gleichzeitiger Drehbewegung um einen Winkel von zumindest näherungsweise 180° in die definierte relative Zielposition P1 und/oder -ausrichtung gegenüber den nachfolgenden Stückgütern 2 der Formation Fa gebracht.

Insbesondere erfolgt die Drehbewegung um eine vorzugsweise in etwa vertikale Achse, die sich zwischen dem jeweiligen wenigstens einen klemmend und/oder kraft- und/oder formschlüssig erfassten Stückgut 2* und der Zielposition P1 befindet.

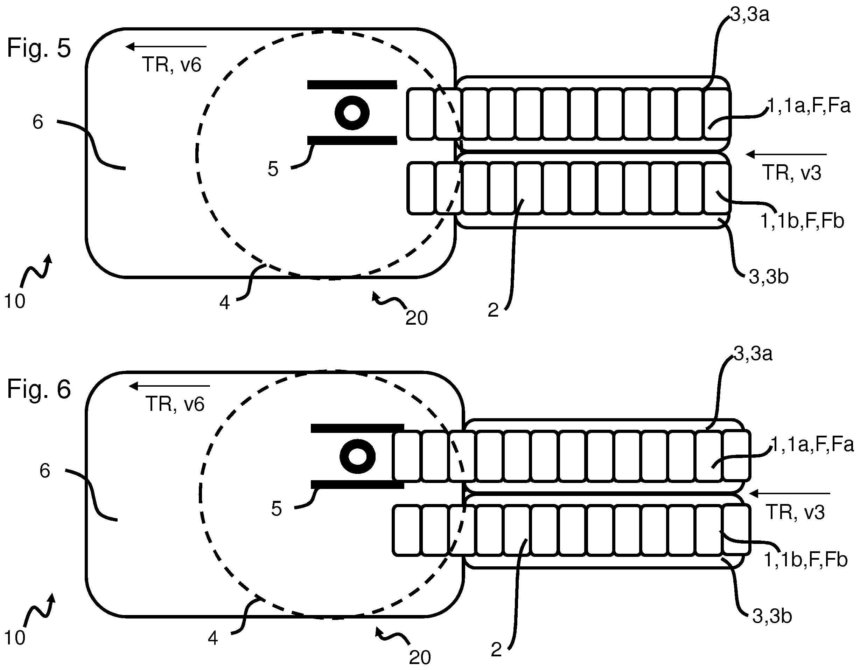

Die 180° Drehung ist insbesondere in Bezug auf die Einsparung von Weg und Zeit optimiert, insbesondere im Zusammenhang mit einer asymmetrischen Erfassung von Stückgütern 2, 2* bzw. mit einem asynchronen Abgreifen von Stückgütern 2, 2*. Bei dem in den Figuren 6 bis 11 dargestellten Abgreifen eines Stückgutes 2, 2* durch einen Manipulator 5, der gemäß dem dargestellten Ausführungsbeispiel bis zu drei Stückgüter 2 erfassen kann, ist wenigstens eine erste vertikale Symmetrieebene des durch den Manipulator 5 erfassten Stückguts 2, 2* beabstandet von einer zweiten vertikalen Symmetrieebene, die durch den Manipulator 5 bzw. durch dessen Klemm- und/oder Greifmittel definiert ist, was im vorliegenden Zusammenhang auch als sog. asynchrones oder asymmetrisches Abgreifen bezeichnet wird.

Wenn im vorliegenden Zusammenhang von vertikalen Symmetrieebenen die Rede ist, die sich in erster Linie auf die Positionierungen der Stückgüter 2, 2* bzw. deren Relativpositionen zum Manipulator 5 bzw. zu dessen Klemm- und/oder Greifmitteln beziehen, so sind diese vertikalen Symmetrieebenen definitionsgemäß senkrecht oder ungefähr senkrecht zu einer Horizontalförderebene der Horizontalfördereinrichtung 6 orientiert. Sinnvollerweise sind diese Symmetrieebenen, d.h. die erste Symmetrieebene, zweite und ggf. weitere Symmetrieebenen, auch senkrecht zur horizontal verlaufenden Transportrichtung TR und/oder in etwa senkrecht zu einer Längserstreckungsrichtung der geschlossenen Formation F orientiert. Sofern sich der Leser diese Transportrichtung TR als horizontalen Vektorpfeil vergegenwärtigt, der parallel zur horizontalen Auflageebene der Horizontalfördereinrichtung 6 sowie parallel zur normalerweise ebenfalls horizontal oder abschnittsweise horizontal verlaufenden Transporteinrichtung 3 verläuft, so durchstößt dieser Vektorpfeil die senkrecht stehenden Symmetrieebenen ebenfalls im Wesentlichen senkrecht. Wie erwähnt, sind diese mindestens zwei Symmetrieebenen - eine bezieht sich auf die Stückgüter 2, die andere auf den Manipulator 5 - in einem gewissen Abstand, sofern der Manipulator 5 unsymmetrisch oder einseitig beladen ist. Falls die Symmetrieebenen zusammenfallen oder ungefähr zusammenfallen, liegt der Sonderfall des vollständig beladenen und/oder symmetrisch bzw. mittig beladenen Manipulators 5 vor.

Rein vorsorglich sei ergänzend erwähnt, dass es sich bei den Stückgütern 2 bzw. 2*, auf die sich die erste vertikale Symmetrieebenen bezieht, um die jeweilige Gesamtheit von Stückgütern 2 und/oder 2* handelt, die sich in dem jeweils betreffenden Arbeitstakt im Manipulator 5 bzw. zwischen dessen beiden Klemmbacken 22 befinden. Diese Gesamtheit der Stückgüter 2 und/oder 2* kann somit ggf. auch durch das Gesamtvolumen und/oder den Masseschwerpunkt der insgesamt im Manipulator 5 erfassten Stückgüter 2 und/oder 2* charakterisiert werden, sofern dies im Einzelfall zweckmäßig ist.

In entsprechender Weise handelt es sich bei der zweiten vertikalen Symmetrieebene des Manipulators 5 sinnvollerweise um diejenige Symmetrieebene, die durch den Mittelpunkt der Gesamtheit an Stückgütern 2 und/oder 2* verläuft, wenn der Manipulator 5 vollständig beladen bzw. entsprechend seiner maximalen Erfassungskapazität beladen ist, was normalerweise auch eine mittige, symmetrische und/oder gleichmäßige Beladung impliziert. Wenn im Zusammenhang der Lokalisierung der zweiten vertikalen Symmetrieebene von einem Mittelpunkt der Gesamtheit an Stückgütern 2 und/oder 2* die Rede ist, so kann dies je nach Ausgestaltung der Stückgüter bspw. der Massenschwerpunkt der Gesamtheit an im Manipulator 5 erfassten Stückgütern 2 und/oder 2* oder auch der volumetrische Mittelpunkt dieser Gesamtheit sein.

Aufgrund des häufig asynchron erfolgenden Abgreifens von Stückgütern 2, 2* aus der geschlossenen und/oder getakteten Formation F der zum Erfassungsbereich 4 geförderten Stückgutreihen 1 können bestimmte sinnvolle Einschränkungen hinsichtlich der dem Abgreifen und Erfassen der Stückgüter 2 aus der Formation F unmittelbar folgenden Bewegungsabläufe des Manipulators 5 definiert werden. Was unter asynchronem Abgreifen zu verstehen ist, wird nachfolgend im Zusammenhang mit den Figuren 48 verdeutlicht. Sofern der Greiferkopf des Manipulators 5 in der beschriebenen unsymmetrischen Weise bzw. in sog. asynchroner Bestückung mit Stückgütern 2, 2* beladen ist, womit die Distanzierung der jeweiligen ersten bzw. zweiten Symmetrieebenen - dies sind die jeweiligen vertikalen Symmetrieebenen, die in etwa senkrecht zur Transportrichtung TR bzw. zur Längserstreckungsrichtung der Stückgutformation orientiert sind - gemeint ist, ist bei einer Verschiebung nach links bzw. nach rechts, der ggf. jeweils eine Rotation überlagert sein kann, nicht jede Rotationsrichtungsvariante sinnvoll durchführbar, da dies unter Umständen zu einem unnötig langen Verschiebeweg führen könnte, der vom Manipulator 5 insgesamt auszuführen wäre.

Bei dem gemäß Figur 7 unsymmetrisch mit einem Stückgut 2, 2* beladenen Manipulator 5 kann es vorteilhaft sein, dass der Manipulator 5, um das Stückgut 2, 2* in einer Flucht zur Formation Fa zu beabstanden, dieses nicht durch eine Beschleunigung in Transportrichtung TR verschiebt. Stattdessen führt der Manipulator 5 - wie in den Figuren 8 bis 11 dargestellt - eine Rotation um 180° um eine senkrecht zur horizontalen Auflageebene der Horizontalfördereinrichtung 6 ausgebildeten Drehachse aus. Dadurch wird das erfasste Stückgut 2, 2* in einer Zielposition P1 befördert, die sich in einer Flucht beabstandet vor der Formation Fa befindet. Gegebenenfalls wird diese Drehung des Manipulators 5 zusätzlich durch eine Verschiebung des Manipulators 5 in Transportrichtung TR oder entgegen der Transportrichtung TR überlagert, um die definierte Zielposition P1 exakt einzustellen.

Durch die Drehung des Manipulators 5 muss dieser keine oder nur eine geringe Bewegung in oder entgegen zur Transportrichtung TR ausführen. Dies ist vorteilhaft, da der Manipulator diese Wegstrecke anschließend nicht wieder in der Gegenrichtung zurücklegen muss, um weitere Stückgüter 2 aus einer der einlaufenden Formationen Fa, Fb abzugreifen. Ein weiterer Vorteil der 180° Drehung besteht darin, dass der Manipulator 5 bereits in einer Konfiguration vorliegt, in der der Manipulator 5 sofort weitere Stückgüter 2 erfassen kann, ohne dass zuerst eine Rückdrehung in eine Ausgangsstellung erfolgen muss. D.h. im nachfolgenden Verfahrensschritt können nunmehr mit dem Greiferende des Manipulators 5, das im beschriebenen Verfahrensschritt der 180° Drehung unbeladen war, weitere Stückgüter 2 abgegriffen werden. Dieser Aspekt führt ebenfalls zu einer merklichen Zeitersparnis und somit zu einem erhöhten Durchsatz bei der Produktbearbeitung.

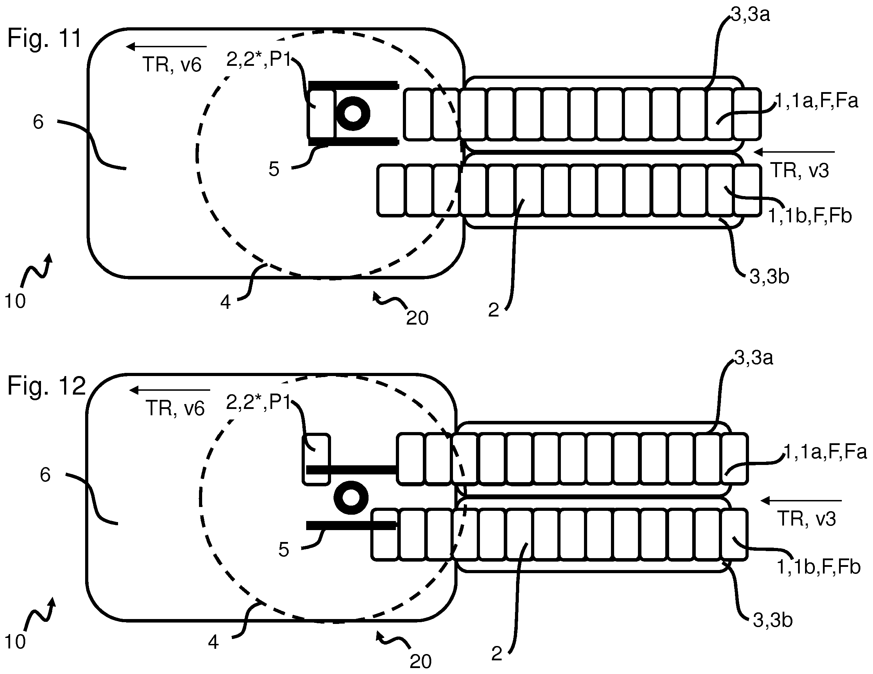

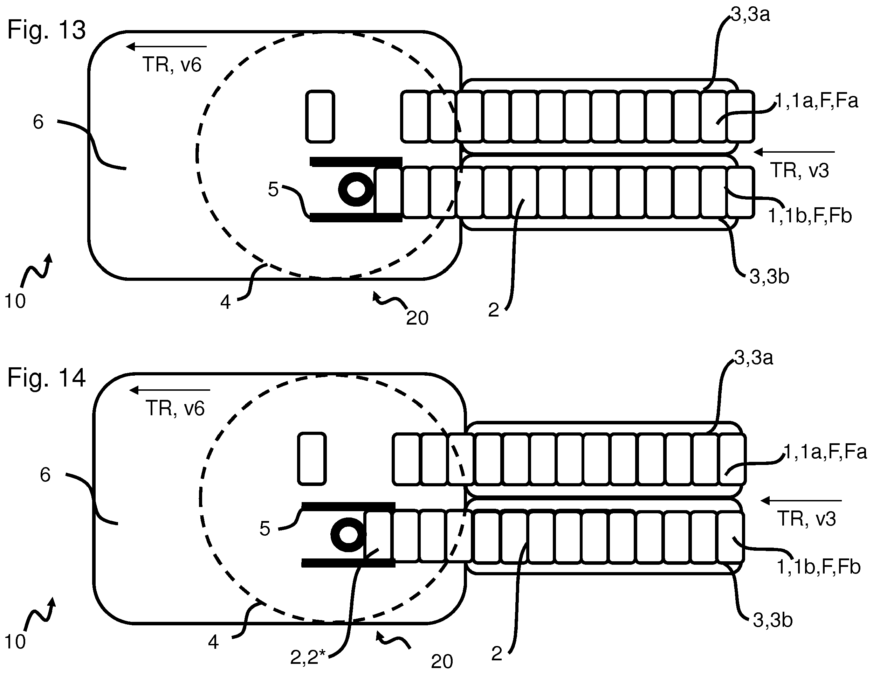

Wie in Figur 12 dargestellt, löst sich der Manipulator 5 von dem an die Zielposition P1 beförderten Stückgut 2*, um nunmehr, wie in den Figuren 13 bis 17 dargestellt, ein Stückgut 2, 2* aus der einlaufenden Formation Fb abzugreifen und dieses unter Drehung in eine Zielposition P2 und entsprechende Zielausrichtung zu befördern. Dabei wird das transportierte Stückgut 2* unter gleichzeitiger Drehbewegung um einen Winkel von zumindest näherungsweise 90° in die definierte relative Zielposition P2 und/oder - ausrichtung gegenüber den nachfolgenden Stückgütern 2 der Formation Fb gebracht. Auch hierbei erfolgt eine Drehbewegung um eine vorzugsweise in etwa vertikale Achse, wobei die Achse der Drehbewegung im Verlauf der Drehbewegung zusätzlich zumindest zeit- und/oder abschnittsweise in Richtung der definierten Zielposition P2 bewegt wird. Insbesondere kann vorgesehen sein, dass die Achse im Verlauf der Drehbewegung zumindest zeitweise in Richtung der definierten Zielposition P2 mit einer Geschwindigkeit bewegt wird, die größer ist als die Transportgeschwindigkeit v3 der einlaufenden geschlossenen Formation F. Alternativ oder zusätzlich kann vorgesehen sein, dass die Achse im Verlauf der Drehbewegung zumindest zeitweise in einer bestimmten Position verweilt.

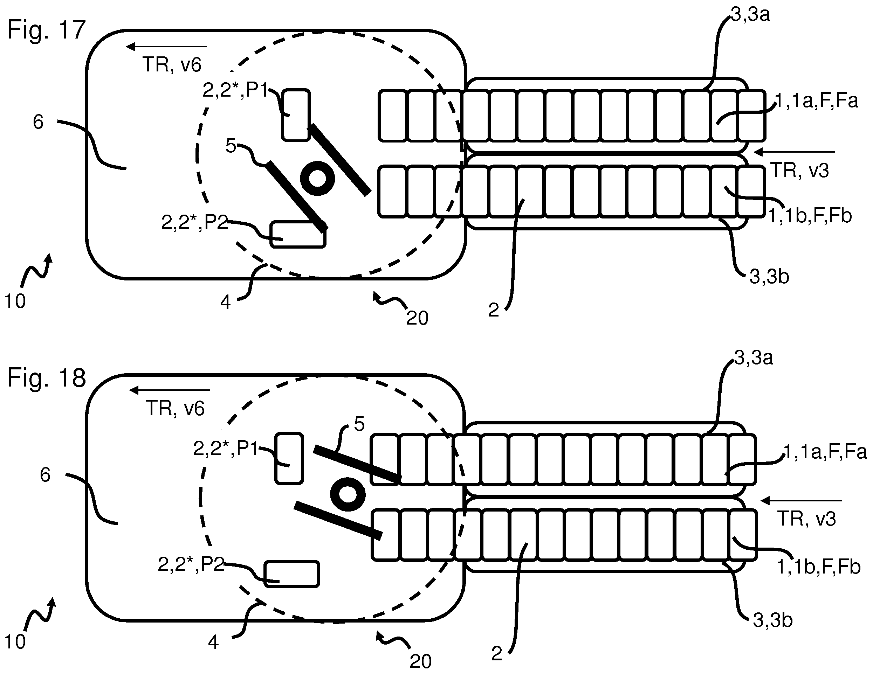

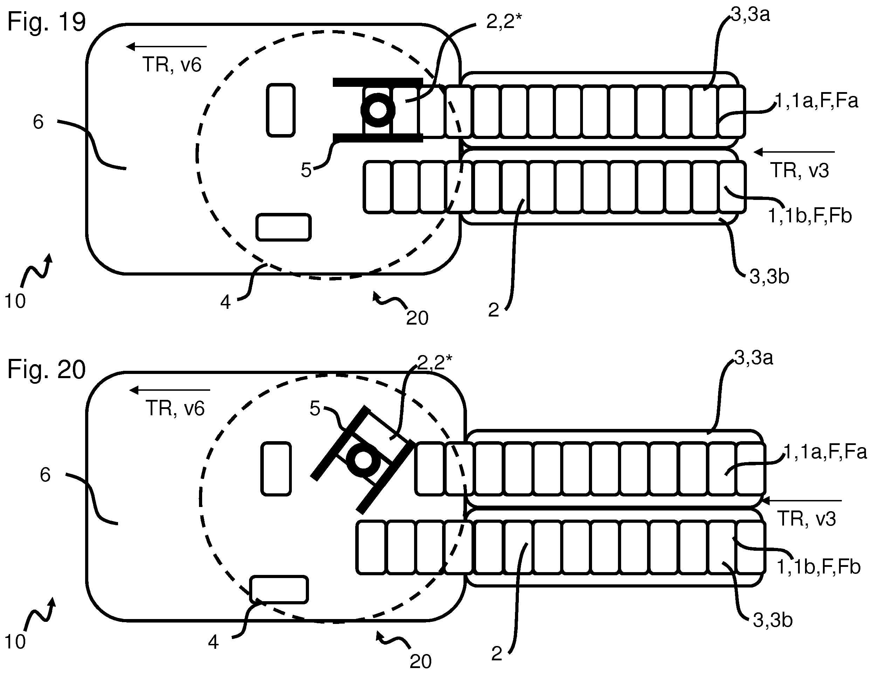

Wie in den Figuren 17 und 18 dargestellt, löst sich der Manipulator 5 von dem an die Zielposition P2 beförderten Stückgut 2*, um nunmehr, wie in den Figuren 19 bis 21 dargestellt, zwei Stückgüter 2, 2* aus der einlaufenden Formation Fa abzugreifen und diese unter Drehung in eine Zielposition P3 und entsprechende Zielausrichtung zu befördern.

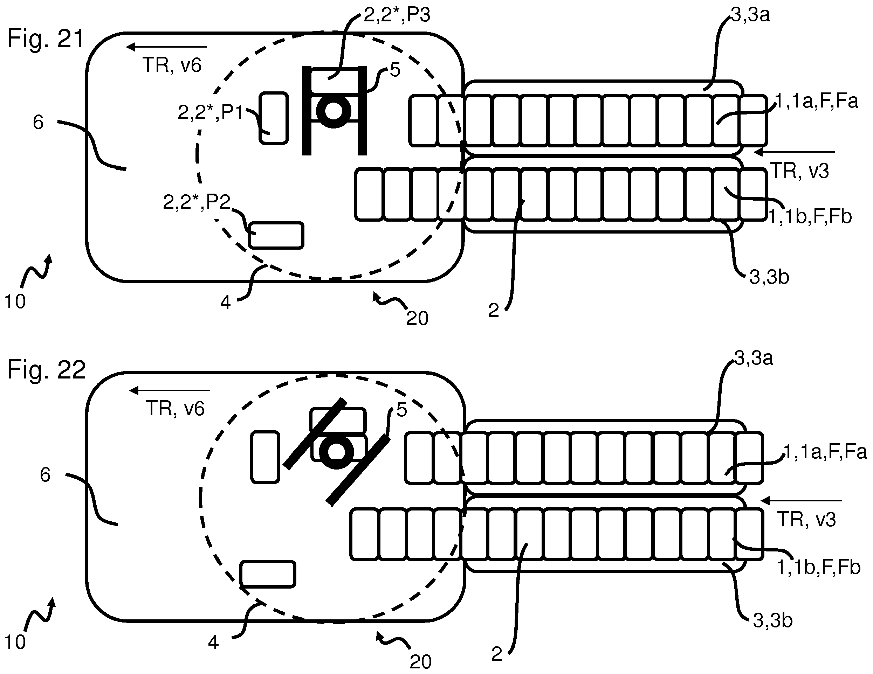

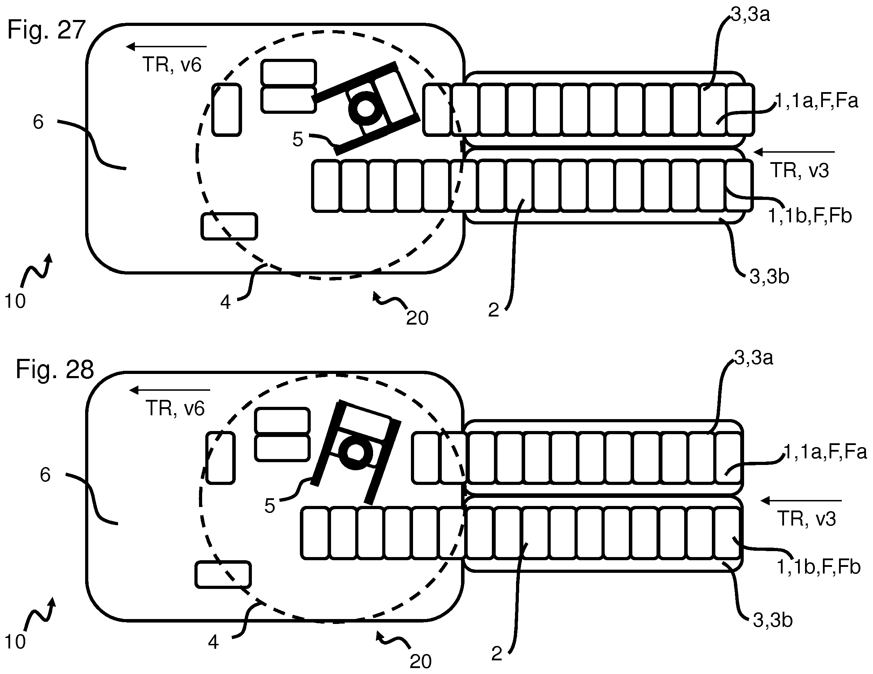

In den Figur 22 bis 26 ist dargestellt, dass sich der Manipulator 5 nunmehr wiederum zu der einlaufenden geschlossenen Formation Fa bewegt und von dieser die vordersten beiden Stückgüter 2, 2* greift und diese gemäß Figuren 27 bis 29 unter Drehung in eine Zielposition P4 und entsprechende Zielausrichtung auf der Horizontalfördereinrichtung 6 befördert.

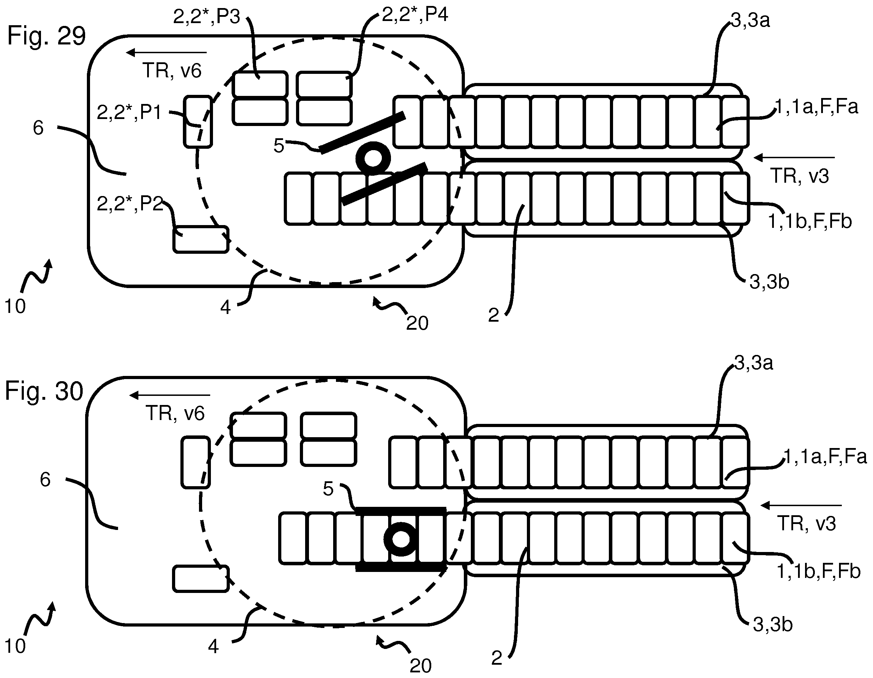

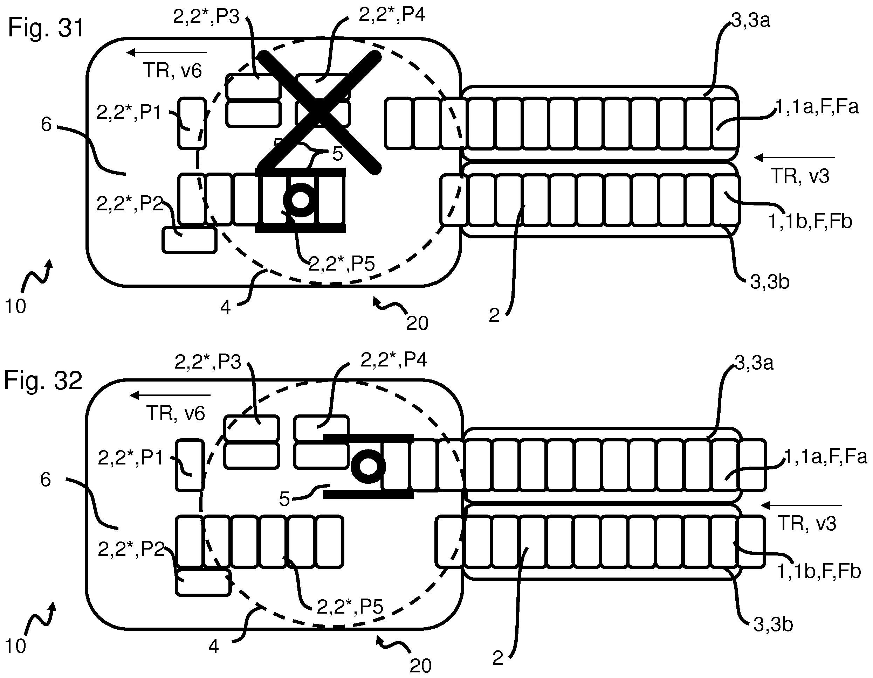

Figuren 30 und 31 stellen nunmehr einen weiteren Manipulationsschritt dar. Hierbei greift der Manipulator 5 nicht die zuvorderst einlaufenden Stückgüter 2 der geschlossenen Formation Fb. Stattdessen erfasst der Manipulator 5 das vierte, fünfte und sechste Stückgut 2 der geschlossenen Formation Fb. Insbesondere eilen den durch den Manipulator 5 erfassten Stückgütern 2* der Formation Fb somit drei weitere Stückgüter 2 voraus. Das drei klemmend und/oder kraft- und/oder formschlüssig durch den Manipulator 5 erfassten Stückgüter 2 werden nun von der geschlossenen Formation Fb räumlich abgetrennt und in eine definierte relative Zielposition P5 und/oder Zielausrichtung gegenüber den nachfolgenden Stückgütern 2 der Formation Fb gebracht. Dabei werden die drei vorauseilenden Stückgüter ebenfalls neu positioniert. In diesem Manipulationsschritt werden also drei Stückgüter 2, 2* vom Manipulator erfasst, aber insgesamt sechs Stückgüter 2, 2* werden in eine Zielposition P5 verschoben, wobei die nicht vom Manipulator 5 erfassten Stückgüter 2 durch einen Oberflächenkontakt zwischen einem vom Manipulator 5 erfassten Stückgut 2* und einem vom Manipulator 5 nicht erfassten Stückgut 2 in die Zielposition P5 geschoben werden.

Die insgesamt sechs Stückgüter 2, 2* gelangen insbesondere durch eine Bewegung in linearer Richtung durch eine geradlinige Beschleunigung in oder ungefähr in einer Längserstreckungsrichtung der geschlossenen Formation Fb in die Zielposition P5. Vorzugsweise sind die insgesamt sechs Stückgüter 2, 2* in ihrer Zielposition P5 in einer Flucht zur geschlossenen Formation Fb angeordnet.

Nach Erreichen der Zielposition P5 und Lösen des Manipulators 5 von der Gruppe an erfassten Stückgütern 2*(vergleiche Figur 32), wird der Oberflächenkontakt zwischen dem vom Manipulator 5 erfassten Stückgut 2* und dem vom Manipulator 5 nicht erfassten Stückgut 2 beibehalten.

In den Figur 32 bis 35 ist dargestellt, dass sich der Manipulator 5 nunmehr wiederum zu der einlaufenden geschlossenen Formation Fa bewegt und von dieser das vorderste Stückgut 2, 2* greift und unter Drehung in eine Zielposition P6 und entsprechende Zielausrichtung auf der Horizontalfördereinrichtung 6 befördert.

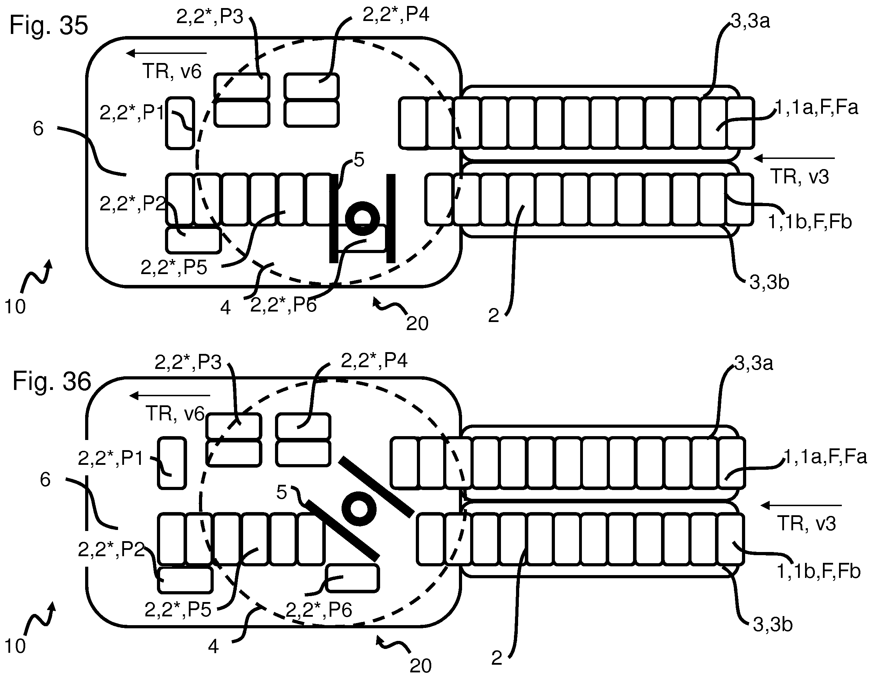

Wie in den Figur 36 bis 39 dargestellt ist, bewegt sich der Manipulator 5 anschließend zu der einlaufenden geschlossenen Formation Fa und greift von dieser das vorderste Stückgut 2, 2*, welches er unter Drehung in eine Zielposition P7 und entsprechende Zielausrichtung auf der Horizontalfördereinrichtung 6 befördert.

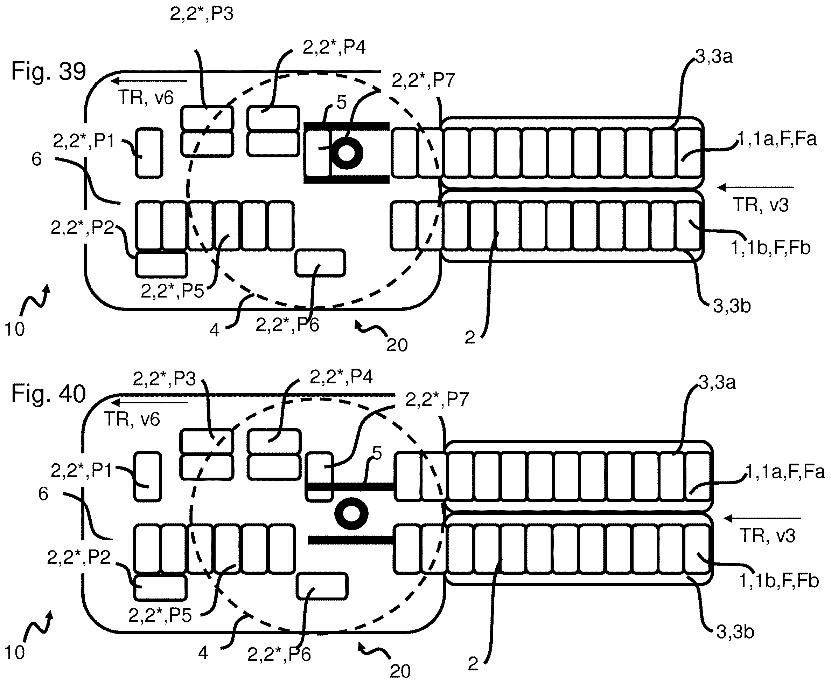

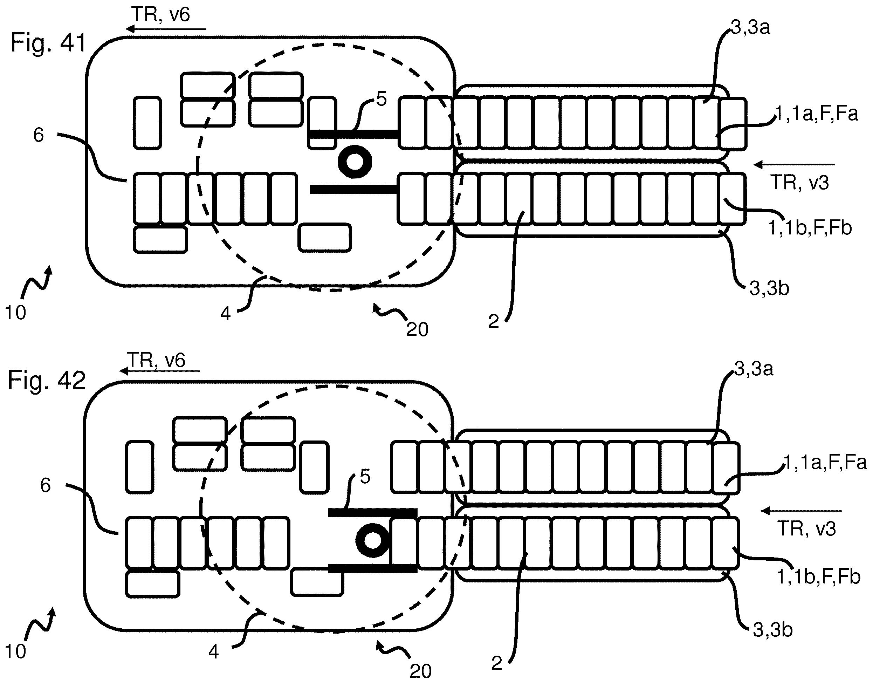

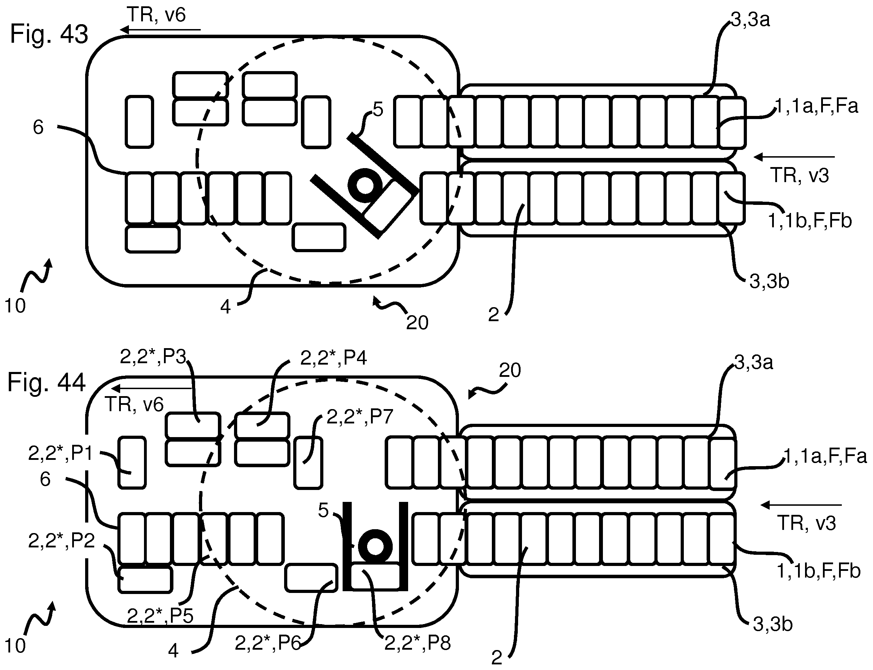

Gemäß Figuren 40, 41 löst sich der Manipulator von dem in Zielposition P7 angeordnetem Stückgut 2* und erfasst gemäß Figur 42 ein weiteres zuvorderst angeordnetes Stückgut 2, 2* der Formation Fb, um dieses unter Drehung in eine Zielposition P8 und entsprechende Zielausrichtung auf der Horizontalfördereinrichtung 6 zu befördern (vergleiche Figuren 43, 44).

Die in Figur 1 dargestellte Ziellage 12 ist somit weitgehend als lose Anordnung vorbereitet. Durch Zusammenschieben mit geeigneten Schiebern wird in einem nicht dargestellten weiteren Verfahrensschritt die gewünschte geschlossene Lage 12 erzeugt und kann für die weitere Verarbeitung beispielsweise auf eine Palette überführt werden.

Bei den beschriebenen Manipulationsschritten werden die erfassten Stückgüter 2* vorzugsweise jeweils in einem einzigen, insbesondere unterbrechungsfreien, Manipulationsschritt in die Zielposition P1 bis P8 und/oder Zielausrichtung überführt, geschoben und/oder gedreht.

Hierbei kann vorgesehen sein, dass der Manipulator 5 die erfassten Stückgüter 2* beispielsweise anhebt, zu einer Zielposition P1 bis P8 befördert und auf der Horizontalfördereinrichtung 6 innerhalb des Erfassungsbereiches 4 wieder absetzt. Alternativ kann vorgesehen sein, dass der Manipulator 5 die Stückgüter 2* auf der Horizontalfördereinrichtung 6 verschiebt, indem er insbesondere eine Geschwindigkeitskomponente und/oder eine Richtungskomponente und/oder Drehbewegungskomponente auf die abgegriffenen Stückgüter 2* aufbringt. Insbesondere bei dem gleichzeitigen Verschieben von durch den Manipulator 5 erfassten Stückgütern und mindestens einem weiteren mit diesem in Oberflächenkontakt stehenden Stückgut 2 ist im Wesentlichen kein Anheben der erfassten Stückgüter 2* vorgesehen. Stattdessen werden diese nur auf der Horizontalfördereinrichtung 6 verschoben.

Die in den Figuren 19 bis 21 dargestellte 90° Drehung einer Einheit aus zwei durch den Manipulator 5 erfassten Stückgütern 2, 2* ist insbesondere in Bezug auf die Einsparung von Weg und Zeit optimiert, insbesondere im Zusammenhang mit einer asymmetrischen Erfassung von Stückgütern 2, 2* bzw. mit einem asynchronen Abgreifen von Stückgütern 2, 2*. Aufgrund des asynchron erfolgenden Abgreifens von Stückgütern 2, 2* aus der geschlossenen und/oder getakteten Formation F der zum Erfassungsbereich 4 geförderten Stückgutreihen 1 können bestimmte sinnvolle Einschränkungen hinsichtlich der dem Abgreifen und Erfassen der Stückgüter 2 aus der Formation F unmittelbar folgenden Bewegungsabläufe des Manipulators 5 definiert werden. Sofern der Greiferkopf des Manipulators 5 in der beschriebenen unsymmetrischen Weise bzw. in sog. asynchroner Bestückung mit Stückgütern 2, 2* beladen ist (vergleiche auch Figuren 48 und Beschreibung hierzu), womit die Distanzierung der jeweiligen ersten bzw. zweiten Symmetrieebenen - dies sind die jeweiligen vertikalen Symmetrieebenen, die in etwa senkrecht zur Transportrichtung TR bzw. zur Längserstreckungsrichtung der Stückgutformation orientiert sind - gemeint ist, ist bei einer Verschiebung nach links bzw. nach rechts, der ggf. jeweils eine Rotation überlagert sein kann, nicht jede Rotationsrichtungsvariante sinnvoll durchführbar, da dies unter Umständen zu einem unnötig langen Verschiebeweg führen könnte, der vom Manipulator 5 insgesamt auszuführen wäre.

Die bspw. anhand der Figuren 7 bis 11 veranschaulichte 180° Drehung zur Positionierung eines Stückgutes 2 bzw. 2* in die erste Zielposition P1 ist insbesondere in Bezug auf die Einsparung von Weg und Zeit optimiert, insbesondere im Zusammenhang mit einer asymmetrischen Erfassung von Stückgütern 2, 2* bzw. mit einem asynchronen Abgreifen von Stückgütern 2, 2*. Bei dem in den Figuren 6 bis 11 dargestellten Beispiel, aber auch bei dem in den Figuren 13 bis 16 anhand einer 90°-Drehung dargestellten Beispiel erfolgt jeweils ein asymmetrisches Abgreifen nur eines Stückguts 2 bzw. 2* durch den Manipulator 5, der gemäß dem dargestellten Ausführungsbeispiel jeweils bis zu drei Stückgüter 2 bzw. 2* in einem Erfassungsschritt aufnehmen und manipulieren kann.

Die vom Manipulator 5 durchgeführte 180° Drehung (vgl. die Figuren 6 bis 11) ist besonders vorteilhaft im Sinne einer Wegersparnis. Die Rotation um 180° erfolgt um eine senkrecht zur horizontalen Auflageebene der Horizontalfördereinrichtung 6 orientierte Drehachse. Dadurch wird das jeweils erfasste Stückgut 2 bzw. 2*, ggf. auch die jeweils erfasste Einheit aus zwei Stückgütern 2, 2* (hier nicht gezeigt, dafür im Ausführungsbeispiel gemäß Fig. 19 ff.) in eine Zielposition P bzw. P1 (Fig. 11, Fig. 12) befördert, die sich in einer Flucht in Transportrichtung beabstandet vor der Formation F befindet. Zusätzlich wird diese Drehung des Manipulators 5 durch eine Verschiebung des Manipulators 5 in Transportrichtung TR überlagert, um die definierte Zielposition P1 exakt einzustellen.

Durch die Drehung des Manipulators 5 muss dieser eine geringere Wegstrecke in Transportrichtung TR zurücklegen. Dies ist vorteilhaft, da der Manipulator diese Wegstrecke anschließend nicht wieder in der Gegenrichtung zurücklegen muss, um weitere Stückgüter 2 aus einer der einlaufenden Formation F abzugreifen. Ein weiterer Vorteil der 180° Drehung besteht darin, dass der Manipulator 5 bereits in einer Konfiguration vorliegt, in der der Manipulator 5 sofort weitere Stückgüter 2 erfassen kann, ohne dass zuerst eine Rückdrehung in eine Ausgangsstellung erfolgen muss. D.h. im nachfolgenden Verfahrensschritt können nunmehr mit dem Greiferende des Manipulators 5, das im beschriebenen Verfahrensschritt der 180° Drehung unbeladen war, weitere Stückgüter 2 abgegriffen werden, was bspw. in den Fig. 13 ff. gezeigt ist. Dieser Aspekt führt ebenfalls zu einer merklichen Zeitersparnis und somit zu einem erhöhten Durchsatz bei der Produktbearbeitung.

Bei dem gemäß Figur 6 ff, jeweils unsymmetrisch mit nur einem Stückgut 2 bzw. 2* der Formation F beladenen Manipulator 5 wird dieser gemäß einer nicht zur Erfindung gehörigen Ausführungsvariante kurz in Transportrichtung TR beschleunigt, um den asymmetrisch beladenen Manipulator 5 von der nachfolgenden Stückgütern 2 der weiterhin einlaufenden Formation F abzutrennen und zumindest geringfügig, zu beabstanden. Dieser Abstand ist bei dieser Variante notwendig, um im Rahmen einer Rotationsbewegung, die gegebenenfalls zusätzlich durch eine Bewegungskomponente in Transportrichtung TR überlagert wird, das erfasste Stückgut 2 bzw. 2* in der jeweiligen Zielposition P1 (vgl. Fig. 11, Fig. 12) anzuordnen, die sich seitlich zur geradlinigen Bewegungsbahn TB der geschlossenen Formation F oder weitgehend in Flucht zur rechten Seite der geradlinigen Bewegungsbahn TB der geschlossenen Formation F befindet. Die Beabstandung der Stückgüter 2, 2* von der Formation F durch kurzzeitige Beschleunigung des Manipulators, bevor die Rotation um 90° oder 180°erfolgt, um eine Zielausrichtung des Stückgutes oder der Einheit aus zwei Stückgütern 2, 2* der Formation F herzustellen, ist insbesondere notwendig, um eine Kollision der vom Manipulator 5 erfassten Stückgüter 2, 2* mit den nachlaufenden Stückgütern 2 der Formation F bzw. Fa zu vermeiden. Bei Verbringung des einzelnen erfassten Stückgutes 2 bzw. 2* oder der asymmetrisch erfassten Einheit aus zwei Stückgütern 2, 2* rechts zur geradlinigen Bewegungsbahn TB der geschlossenen Formation F ist eine Linksdrehung zur Minimierung der vom Manipulator zurückzulegenden Wegstrecke vorteilhaft. Dagegen ist, bei Verbringung des Stückgutes oder der asymmetrisch erfassten Einheit aus zwei Stückgütern 2, 2* links zur geradfinigen Bewegungsbahn TB der geschlossenen Formation F eine Rechtsdrehung zur Minimierung der vom Manipulator zurückzulegenden Wegstrecke, von Vorteil. Dies führt zu einer merklichen Zeitersparnis und somit zu einem erhöhten Durchsatz bei der Produktbearbeitung.

Bei den hier beschriebenen Manipulationsschritten ist insbesondere vorgesehen, dass sich der Manipulator 5 zumindest beim Erfassen des / der Stückgüter 2* und bei deren Freigabe in der jeweiligen Zielposition P1 bis P8 und Zielausrichtung mit einer Geschwindigkeit bewegt, die annähernd bzw. exakt der Transportgeschwindigkeit v3 entspricht, mit der sich die geschlossenen Formationen Fa, Fb der Stückgüter 2 bewegen.

Die Zielpositionen P1 bis P8 stellen jeweils eine Relativposition gegenüber der Formation Fa bzw. Fb dar. Da sich die Transporteinrichtungen 3a, 3b und somit die Formationen Fa, Fb mit derselben Geschwindigkeit bewegen wie die Horizontalfördereinrichtung 6, bleibt der relative Abstand zwischen den Stückgütern 2* in ihrer jeweiligen Zielposition P1 bis P8 und einem noch nicht vom Manipulator 5 erfassten Stückgut 2 der Formationen Fa, Fb im weiteren Ablauf immer gleich, obwohl sich alle Stückgüter 2, 2* kontinuierlich weiter bewegen.

In dem Zeitfenster zwischen dem Erfassen von Stückgütern 2* durch den Manipulator 5 und deren Freigabe in der jeweiligen Zielposition P1 bis P8 ist die Geschwindigkeit des Manipulators 5 gegenüber der Transportgeschwindigkeit v3 der Formationen Fa, Fb erhöht. Die Bewegungsrichtung des Manipulators 5 beim Befördern der Stückgüter 2* der Formation F in eine Zielposition P1 bis P8 ergibt sich beispielsweise aus einer ersten Bewegungskomponente parallel zur Transportrichtung TR der Formation Fb und einer zweiten Bewegungskomponente senkrecht zur Transportrichtung TR der Formation F. Dadurch können die vom Manipulator 5 erfassten Stückgüter 2* in eine definierte Zielposition im Erfassungsbereich 4 des Manipulators 5 bewegt werden, die sich in Transportrichtung TR beabstandet vor der Formation F und seitlich verschoben zur Formation F befindet. Ist die zweite Bewegungskomponente senkrecht zur Transportrichtung TR der Formation F gleich Null, dann werden die erfassten Stückgüter 2* in eine Position verschoben, die sich in einer Flucht zur jeweiligen Formation F befindet (vergleiche beispielsweise Figuren 30 und 31).

Weiterhin kann vorgesehen sein, dass sich der Manipulator um einer Drehachse dreht, die senkrecht zur Ebene der Horizontalfördereinrichtung 6 ausgebildet ist und dadurch eine entsprechende Umpositionierung der erfassten Stückgüter 2* bewirkt. In Abhängigkeit davon, ob zusätzliche Bewegungskomponenten auf den Manipulator 5 aufgebracht werden, sind die derart bewegten Stückgüter 2* in einer Flucht zur jeweiligen Formation F angeordnet (vergleiche Figuren 7 bis 11) oder aber seitlich verschoben dazu angeordnet.

Gemäß einer weiteren nicht dargestellten Ausführungsform kann vorgesehen sein, dass der Manipulator 5 nach Verschieben einer Gruppe von erfassten Stückgüter 2* und mindestens einem vom Manipulator 5 nicht erfassten Stückgut 2, das in Oberflächenkontakt mit einem erfassten Stückgut 2* steht, sich von der Gruppe löst, anschließend erneut mindestens ein Stückgut 2, 2* dieser Gruppe erfasst und dieses dreht und/oder gegenüber der Gruppe verschiebt o.ä.

Auch kann ein Manipulator 5 mit erfassten Stückgütern 2* verwendet werden, um mindestens ein bereits in einem vorhergehenden Schritt in einer Zielposition angeordnetes Stückgut 2 durch Oberflächenkontakt zwischen dem vom Manipulator 5 erfassten Stückgut 2* und dem bereits auf der Horizontalfördereinrichtung 6 in einer ersten Zielposition angeordneten Stückgut 2 in eine neue Zielposition zu verschieben. Der Manipulator 5 setzt anschließend das erfasste Stückgut 2* an der neuen Zielposition frei, so dass ein Oberflächenkontakt zwischen dem bereits in einem vorhergehenden Schritt in einer Zielposition angeordnetem Stückgut 2 und dem weiteren Stückgut 2* bestehen bleibt.

Während der Positionierung der vom Manipulator 5 erfassten Stückgüter 2* werden die mindestens eine Transporteinrichtung 3 und die Horizontalfördereinrichtung 6 weiterhin konstant betrieben.

Die Geschwindigkeit v3, v6 ist dabei so gewählt, dass der Manipulator 5 innerhalb des ihm zur Verfügung stehenden Arbeitsbereichs ausreichend Zeit hat, um die Stückgüter 2* zu verschieben. Bevorzugt besteht der Manipulator 5 aus einem Deltakinematik- Roboter, um hoch dynamische Verschiebebewegungen zu realisieren und möglichst schnelle Taktzeiten zu ermöglichen.

Gemäß einer nicht dargestellten Ausführungsform der Erfindung kann vorgesehen sein, dass die die Drehbewegungen des wenigstens einen Manipulators 5 bei wenigstens zwei aufeinanderfolgenden Schritten zum jeweiligen Verbringen von Stückgütern 2, 2* von der geschlossenen Formation in die jeweils vorgesehenen Zielpositionen und/oder - ausrichtungen mit jeweils gleichsinnigem Drehsinn erfolgen, insbesondere unter Weiterdrehung des Manipulators 5 über einen Drehwinkel von 180° hinaus. Beispielsweise könnte vorgesehen sein (nicht dargestellt), dass der Manipulator ein Stückgut 2, 2* oder eine Gruppe von zwei oder drei Stückgütern 2, 2* der Formation Fa erfasst und unter Drehung um 180° und gegebenenfalls zusätzlicher Verschiebung des Manipulators 5 mit Bewegungskomponenten parallel und/oder senkrecht zur Transportrichtung TR der Formation Fa in eine Zielposition befördert. Nachdem sich der Manipulator 5 von dem platzierten einen Stückgut 2, 2* oder der platzierten Gruppe von Stückgütern 2, 2* gelöst hat, kann sich dieser im gleichen Drehsinn um weitere 180° drehen und anschließend beispielsweise Stückgüter 2, 2* der Formation Fb abgreifen und diese in ihre jeweilige Zielposition befördern, wobei weiterhin der Drehsinn beibehalten wird. Alternativ muss der Manipulator 5 nach ablösen vom im ersten beschrieben Schritt erfassten Stückgut / Stückgüter der Formation F1 nicht gedreht werden, sondern kann direkt zum abgreifen weiterer Stückgüter 2, 2* verwendet werden. Es ist somit nicht zwingend ein Verdrehen des Manipulators 5 notwendig, stattdessen kann eine Bewegung mit Bewegungskomponenten entgegen der Transportrichtung der Formationen Fa, Fb und/oder ggfl. senkrecht zur Transportrichtung der Formationen Fa, Fb ausreichend sein.

Durch die beschriebenen Variationsmöglichkeiten kann besonders vorteilhaft eine Verkürzung der Wegstrecken, die der Manipulator 5 mit den erfassten Stückgütern 2* vornimmt, erzielt werden. Durch die ebenfalls beschriebene anfängliche zumindest kurzzeitige Beschleunigung der erfassten Stückgüter 2, 2* in Transportrichtung TR wird je nach Manipulations- bzw. Bewegungssituation eine Kollision eine Kollision mit den nachfolgenden Stückgütern 2 der Formation F vermieden.

Bei dem hier beschriebenen Verfahren werden die Gruppen an Stückgütern 2* gemäß der zu bildenden Gruppierung, Teillage oder Lage während des Gruppier-/ Positionierprozesses gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen wesentlichen Unterschied zum Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

Insbesondere werden hier mindestens zwei parallele Reihen 1a, 1b von Stückgütern 2 kontinuierlich einem aus dem beweg-, verschieb- und/oder rotierbaren Manipulator 5 und Horizontalfördereinrichtung 6 bestehenden Gruppiermodul 20 zugeführt. Der Manipulator 5 arbeitet die Stückgüter 2 der einlaufenden Formationen Fa, Fb beispielsweise sequenziell ab, in dem er abwechselnd einzelne Stückgüter 2, 2* oder Gruppen von Stückgütern 2, 2* der Formationen Fa, Fb erfasst und in ihre Zielpositionen P1 bis P8 befördert. Alternativ kann auch vorgesehen sein, dass der Manipulator zweimal hintereinander von einer der Formationen Fa oder Fb jeweils mindestens ein Stückgut 2, 2* erfasst, abtrennt und zur Zielposition P1 bis P8 und/oder Zielausrichtung befördert. Dies führt zu einer deutlichen Erhöhung des Durchsatzes bei gleichzeitig kompakter Bauweise.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2*, 2a in die Zielposition P, Pa und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. Gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators), der die Stückgüter 2, 2*, 2a in der gewünschten Weise erfassen, verschieben, positionieren, platzieren, drehen etc. kann, um die jeweiligen Zielpositionen P, Pa und/oder Zielausrichtungen für die Stückgüter 2, 2*, 2a anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

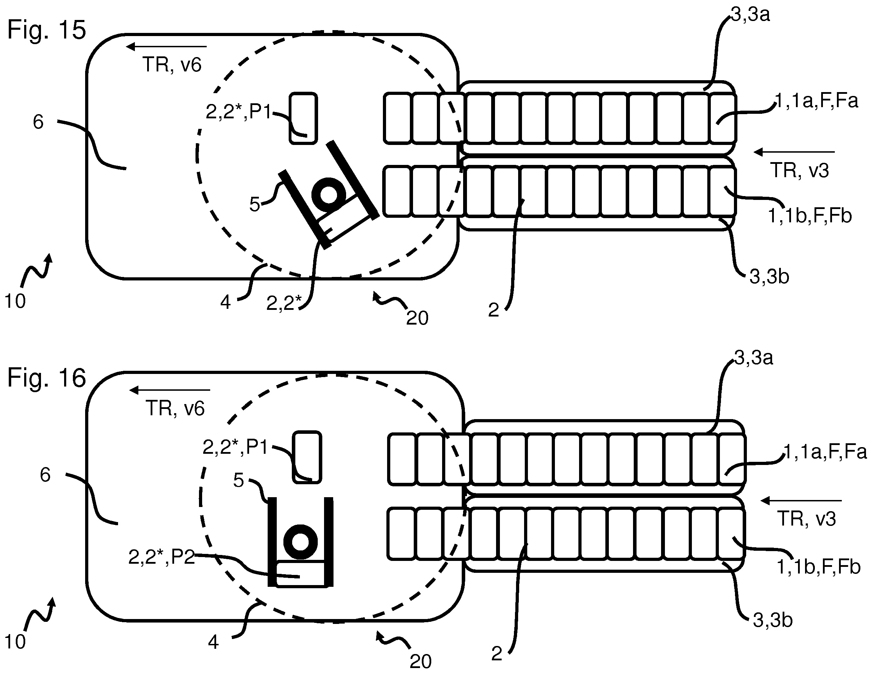

Figuren 15 bis 47 zeigen verschiedene Ansichten einer Ausführungsform eines Manipulators 5, 50 einer Handhabungsvorrichtung 10 und/oder Manipulationsvorrichtung (gemäß einer der voranstehenden Figuren) zur Durchführung einer Variante oder mehrerer Varianten des erfindungsgemäßen Verfahrens. So zeigt Figur 45 insbesondere eine schematische Perspektivansicht der Vorrichtung bzw. eines Deltakinematik-Roboters; Figur 46 zeigt eine schematische Detailansicht eines unteren Teils der Vorrichtung aus Figur 45 und Figur 47 zeigt eine schematische Querschnittsdarstellung durch die Vorrichtung aus dem Ausführungsbeispiel gemäß Figur 45 und Figur 46.

Einleitend sei an dieser Stelle darauf hingewiesen, dass die in den Figuren 45 bis 47 erläuterten Ausführungsvarianten der Vorrichtung zur Durchführung zumindest einiger Varianten des erfindungsgemäßen Verfahrens sich auf einen Deltaroboter, einen sog. Tripod bzw. auf einen Deltakinematik-Roboter mit drei gleichartigen Schwenkarmen beziehen, der einen Teil einer Handhabungseinrichtung bzw. eines Manipulators zur Handhabung, zum Drehen, Verschieben oder Aufnehmen von Artikeln, Stückgütern oder Gebinden bilden oder diese Handhabungseinrichtung bzw. diesen Manipulator enthalten kann. Hinsichtlich einer möglichen Ausgestaltung des Deltaroboters bzw. Tripods, seines Aufbaus, seiner Funktionsweise und seines Bewegungsraumes sei insbesondere auf den Offenbarungsgehalt der DE 10 2013 106 004 A1 verwiesen. Auf eine detaillierte Beschreibung der Bewegungsmodi, der Antriebe für die drei Schwenkarme etc. soll deshalb an dieser Stelle verzichtet werden. Grundsätzlich könnte die Vorrichtung 41 gemäß Figur 45 bis Figur 47 auch vier gleichartige Stellarme aufweisen.

Im Folgenden ist der die Vorrichtung 41 bildende bzw. diese Vorrichtung 41 enthaltende Roboter, der gleichzeitig die Handhabungseinrichtung bzw. den Manipulator enthält, umfasst bzw. davon einen Teil bilden kann, allgemein mit der Bezugsziffer 42 bezeichnet. Es sei darauf hingewiesen, dass der mit der Bezugsziffer 42 bezeichnete Roboter auch als Deltaroboter 42, als Deltakinematik-Roboter 42, als Parallelkinematik-Roboter 42 oder auch als Tripod 42 (vgl. hierzu Figur 45) bezeichnet sein kann.

Die Figur 45 zeigt eine schematische Perspektivansicht einer Ausführungsform einer Vorrichtung 41 bzw. eines Deltakinematik-Roboters 42 zur Durchführung des erfindungsgemäßen Verfahrens. Die Vorrichtung 41 bzw. der Deltakinematik-Roboter 42 ist bspw. ausgebildet zum Greifen, Drehen und Versetzen zu Gebinden zusammengefasster Getränkebehältnisse, die in Figur 45 nicht mit dargestellt sind. Die Vorrichtung 41 bzw. der Deltakinematik-Roboter 42 kann jedoch ebenso auch zum Greifen, Drehen und Versetzen von beliebigen Artikeln oder Stückgütern eingesetzt werden.

Wie in Figur 45 zu erkennen, besitzt die Vorrichtung 41 bzw. der Deltakinematik-Roboter 42 eine obere Aufhängung 43. An der oberen Aufhängung 43 sind drei Stellarme 45 über einen jeweils zugeordneten Antrieb 48 drehbar befestigt. Die drehende Bewegung der Stellarme 45 erfolgt hierbei derart, dass ihre Drehachsen parallel zueinander verlaufen. Weiter bestehen die drei Stellarme 45 aus wenigstens zwei relativ zueinander schwenkbaren Armabschnitten 47 und 49, wobei die unteren Armabschnitte 47 bzw. Unterarme 47 jeweils aus zwei parallel zueinander orientierten Gestängen gebildet sind. Der jeweilige obere Armabschnitt 49 bzw. Oberarm 49 steht mit seinem jeweils zugeordneten Antrieb 48 in Verbindung bzw. ist an seinem jeweils zugeordneten Antrieb 48 angeflanscht. Zudem können die drei Stellarme 45 unabhängig voneinander bewegt werden. Sämtliche Antriebe 48 stehen hierzu mit einer Steuerungseinheit in Verbindung, welche die Bewegung der Stellarme 45 vorgibt und die Antriebe 48 ansteuert.

Am unteren Ende der drei Stellarme 45 steht ein Manipulator 50 mit den drei Stellarmen 45 derart in Verbindung, dass der Manipulator 50 über eine Bewegung der drei Stellarme 45 zur Handhabung von Artikeln verfahren werden kann. Die in Figur 45 nicht dargestellte Steuerungseinheit gibt daher die Bewegung der Stellarme 45 in Abhängigkeit einer für den Manipulator 50 vorgesehenen Position zum Greifen und Handhaben von Artikeln vor. Sämtliche der drei Stellarme 45 sind über einen Tragring 57 mit einer Basis 60 des Manipulators 50 mechanisch gekoppelt. Die mechanische Verbindung bzw. Koppelung zwischen dem Tragring 57 und der Basis 60 des Manipulators 50 ist derart, dass diese eine relative Verdrehung des Manipulators 50 gegenüber dem Tragring 57 erlaubt. Der Tragring 57 kann auch als Tool-Center-Point der Vorrichtung 41 bezeichnet werden.

In etwa mittig ist der Manipulator 50 an eine Linearführung 56 drehfest angeflanscht, wobei die Linearführung 56 als erste Welle 54 ausgebildet ist und somit der Manipulator 50 über die erste Welle 54 gedreht werden kann.

Weiter ist eine als zweite Welle 58 ausgebildete Betätigungseinrichtung 52 vorgesehen, mittels welcher Klemmbacken 62 und 64 zum Schließen und Öffnen angesteuert werden können. Die Drehachsen der ersten Welle 54 sowie der als zweite Welle 58 ausgebildeten Betätigungseinrichtung 52 sind identisch. Die erste Welle 54 und die zweite Welle 58 sind koaxial zueinander orientiert bzw. angeordnet. Da über die als zweite Welle 58 ausgebildete Betätigungseinrichtung 52 der Manipulator 50 bzw. die sich gegenüberliegenden Klemmbacken 62 und 64 des Manipulators 50 angesteuert werden können, sind keine pneumatischen, hydraulischen oder elektrischen Leitungsverbindungen notwendig, die zur Ansteuerung des Manipulators 50 bzw. der Klemmbacken 62 und 64 mit dem Manipulator 50 in Verbindung stehen.

Vorteilhafterweise besteht hierbei die Möglichkeit, den Manipulator 50 zusammen mit seinen Klemmbacken 62 und 64 über die erste Welle 54 um mehr als 360° zu drehen, da keine Leitungsverbindungen eine vollständige Umdrehung behindern. Hierdurch kann gegenüber aus dem Stand der Technik bekannten Vorrichtungen der Durchsatz bei Handhabung von Artikeln deutlich verbessert werden, da der Manipulator 50 nicht zurückgedreht werden muss, um diesen in eine Ausgangsorientierung zu überführen.

Wie soeben erwähnt, können bei der in Figur 45 gezeigten Ausführungsform die beiden Klemmbacken 62 und 64 durch eine Rotation der als zweite Welle 58 ausgebildeten Betätigungseinrichtung 52 relativ zueinander verstellt werden bzw. aufeinander zu bewegt und voneinander weg bewegt werden. Die jeweilige Bewegung der Klemmbacken 62 und 64 bei Ansteuerung über die als zweite Welle 58 ausgebildete Betätigungseinrichtung 52 ist vorliegend mittels Pfeildarstellung verdeutlicht. Beide Klemmbacken 62 und 64 sind an der Basis 60 des Manipulators 50 hängend und linear beweglich befestigt. Eine Ansteuerung der Klemmbacken 62 und 64 erfolgt über mit der zweiten Welle 58 in Verbindung stehende Übersetzungsstufen eines Getriebes, die in Figur 45 nicht zu erkennen sind und ein Drehmoment der zweiten Welle 58 auf eine Stellbewegung der Klemmbacken 62 und 64 übertragen.

Die Linearführung 56 bzw. die erste Welle 54 umfasst zwei Gehäuseteile 44 und 46, die miteinander teleskopierbar in Verbindung stehen und jeweils einen Hohlraum zur Aufnahme der als zweite Welle 58 ausgebildeten Betätigungseinrichtung 52 bereitstellen. Über ein kardanisch wirkendes Gelenk ist die als zweite Welle 58 ausgebildete Betätigungseinrichtung 52 an den Manipulator 50 und an einen Aktor 70 gekoppelt.

Der Aktor 70 sitzt drehfest auf der oberen Aufhängung 43 auf. Über den Aktor 70 kann das als zweite Welle 58 ausgebildete Betätigungsglied 52 drehend bewegt werden, womit die Klemmbacken 62 und 64 des Manipulators 50 zum Greifen oder Freigeben von Artikeln verfahren werden.

Gemäß dem erfindungsgemäßen Verfahren muss die zweite Welle 58, welche zum Schließen und Öffnen der Klemmbacken 62 und 64 des Manipulators 50 bzw. des Greifers dient, bei einer Drehung des Greifers oder Manipulators 50 durch Betätigung der ersten Welle 54 eine Ausgleichsbewegung durchführen. Diese Ausgleichsbewegung erfolgt als Relativbewegung gegenüber der ersten Welle 54 im Gleichlauf, im Gegenlauf oder synchron. Die Richtung der Ausgleichsbewegung hat je nach gewünschter Funktion zu erfolgen. Werden z.B. die Klemmbacken 62 und 64 durch eine Drehbewegung der zweiten Welle 58 entgegen dem Uhrzeigersinn geschlossen und der Manipulator 50 bzw. der Greifer gleichzeitig durch Drehung der ersten Welle 54 entgegen dem Uhrzeigersinn gedreht, so muss die zweite Welle 58 bei der Drehung des Manipulators 50 ebenfalls eine Drehung entgegen dem Uhrzeigersinn durchführen, um zu verhindern, dass sich die Klemmbacken 62 und 64 öffnen. Analog dazu ist eine Drehung im Uhrzeigersinn umzusetzen. Die erforderlichen Drehrichtungen der Wellen 54 und 58 sind abhängig von der technischen Ausführung der Umsetzung der Drehbewegung der zweiten Welle 58 in eine Linearbewegung der Klemmbacken 62 und 64.

Die schematische Detailansicht der Figur 46 verdeutlicht einen unteren Teil der Vorrichtung 41 bzw. des Deltakinematik-Roboters 42 aus Figur 45 und zeigt hierbei insbesondere nochmals im Detail eine Ausführungsform des Manipulators 50, wie er für das erfindungsgemäße Verfahren und insbesondere zur Durchführung des erfindungsgemäßen Verfahrens vorgesehen sein und eingesetzt werden kann.

Die Klemmbacken 62 und 64 besitzen zum Greifen von Artikeln auf ihrer der jeweiligen gegenüberliegenden Klemmbacke 62 bzw. 64 zugewandten Seite mehrere biegeweiche Kontaktelemente 59. Die biegeweichen Kontaktelemente 59 werden bei einer Zustellbewegung der Klemmbacken 62 und 64 mit den jeweiligen Artikeln kraftbeaufschlagt in Anlage gebracht und setzen die jeweiligen Artikel im Wesentlichen unbeweglich am Manipulator 50 fest.

Auch zeigt die Figur 46 nochmals im Detail die unteren Armabschnitte 47 der Stellarme 45 (vgl. Figur 45), welche jeweils als Gestängekonstruktion ausgebildet sind und an ihrem unteren Ende mit dem Tragring 57 (bzw. dem sog. Tool-Center-Point) jeweils gelenkig in Verbindung stehen. Wie vorhergehend bereits erwähnt, kann der Manipulator 50 über die erste bzw. die äußere Welle 54 relativ zum Tragring 57 gedreht werden.

Die schematische Querschnittsdarstellung der Figur 47 lässt weitere Details der Vorrichtung 41 bzw. des Deltakinematik-Roboters 42 aus dem Ausführungsbeispiel gemäß Figuren 45 und 46 erkennen. In Figur 47 sind nochmals das als zweite Welle 58 ausgebildete Betätigungsglied 52 sowie die als erste Welle 54 ausgebildete Linearführung 56 zu erkennen. Die zweite Welle 58 und die erste Welle 54 besitzen eine konzentrische Orientierung und eine identische Drehachse, d.h. sie sind koaxial zueinander angeordnet. Eine Drehung des Manipulators 50 kann durch die als erste Welle 54 ausgebildete Linearführung 56 bewirkt werden, wobei die Drehachse in Figur 47 vertikal bzw. in Richtung der Bildebene orientiert ist.

Wie bereits erwähnt, sind bei Drehbewegungen des Manipulators 50, die durch Drehungen der äußeren ersten Welle 54 induziert werden, gleichsinnige oder gegensinnige Ausgleichsbewegungen der inneren zweiten Welle 58 erforderlich, um nicht eine unerwünschte Betätigung der Klemmbacken 62 und 64, d.h. deren Öffnen oder weitergehendes Schließen auszulösen. Der Umfang dieser Ausgleichsbewegung richtet sich einerseits nach der kinematischen Verknüpfung der Stellantriebe, die durch die zweite Welle 58 betätigt werden, so z.B. nach der Übersetzung dieser Stellantriebe. So können je nach Übersetzung unterschiedliche Drehwinkel der Ausgleichsbewegung erforderlich sein. Zudem richtet sich die Ausgleichsbewegung nach der Drehrichtung der ersten Welle 54, welche je nach Bedarf eine gegensinnige oder gleichsinnige Ausgleichsbewegung der zweiten Welle 58 erfordert, sollen bei der Drehung des Manipulators 50 die Klemmbacken 62 und 64 unverändert geschlossen oder geöffnet bleiben.

Ergänzend sei erwähnt, dass die Wirkverbindungen der jeweiligen Wellen 54 und 58 mit dem Manipulator 50 bzw. für die Ausgleichs- und/oder Stellbewegungen für die Klemmbacken 62 und 64 auch vertauscht werden können, sofern die entsprechenden mechanischen Voraussetzungen hierfür in den Koppelbereichen innerhalb des Tragrings 57 gegeben sind. So kann die äußere erste Welle 54 wahlweise auch die Klemmbacken 62 und 64 betätigen, d.h. öffnen und schließen, während die innere weitere Welle 58 durchaus auch für die Drehbewegungen des Manipulators 50 bzw. der rotierbaren Abschnitt der Vorrichtung 41 bzw. des Deltakinematik-Roboters 42 zuständig sein bzw. eingesetzt werden kann.

Figur 48A bis 48C zeigen das Erfassen einer unterschiedlichen Anzahl von Stückgütern 2, 2* durch einen Manipulator 5 der in den Figuren 1 bis 12 beschriebenen Handhabungsvorrichtung 10.

Der Manipulator 5 besitzt vorzugsweise eine bestimmte Aufnahmekapazität für mehrere Stückgüter 2, 2*. Jedoch ist vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Formation F erfasst (vergleiche Figuren 1 bis 12). Dies wird insbesondere über eine Steuereinrichtung (nicht dargestellt) kontrolliert und/oder geregelt. Die Anzahl der erfassten Stückgüter 2, 2* variiert hierbei zwischen eins und der maximalen Anzahl gemäß der Aufnahmekapazität des Manipulators 5. Auch wenn in den dargestellten Ausführungsbeispielen eine maximale Aufnahmekapazität von bis zu drei Stückgütern 2, 2* je Manipulator 5 beschrieben wird, so sind die genannten Überlegungen auch auf Manipulatoren 5 mit geringerer oder größerer maximaler Aufnahmekapazität analog anwendbar.

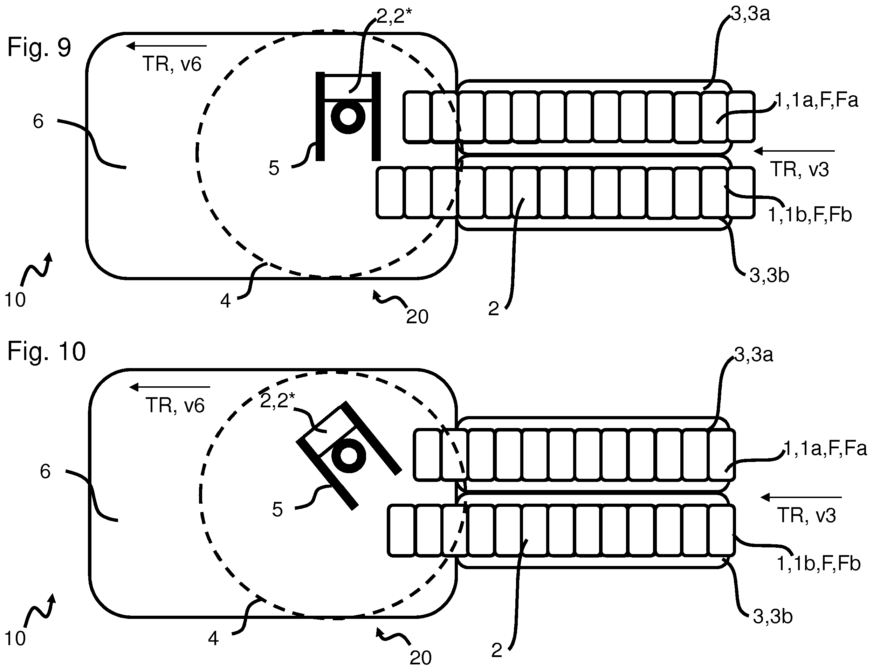

Der in den Figuren 48 schematisch dargestellte Manipulator 5 ist beispielsweise als Greiferkopf 21 ausgebildet und weist zum klemmenden und/oder formschlüssigen Entgegennehmen von Stückgütern 2, 2* zwei starre, bewegliche und/oder gegeneinander zustellbare, sich gegenüberliegende Klemm- und/oder Greifmittel auf, insbesondere zwei Klemmbacken 22 oder Greiferpaddel oder ähnliches. Zwischen den Klemmbacken 22 kann das mindestens eine Stückgut 2, 2* geklemmt und dadurch entsprechend zur gewünschten Zielposition P (vergleiche Figur 9) bewegt werden. Die Länge L der Klemmbacken 22 ist derart gewählt, dass eine maximale Anzahl an Stückgütern 2*, welche einen Takt für die Lage bilden, abgegriffen werden können. Der in den Figuren 48 dargestellte Manipulator 5 kann insbesondere ein Stückgut 2* (vergleiche Figur 48A), zwei Stückgüter 2* (vergleiche Figur 48B) oder drei Stückgüter 2* (vergleiche Figur 48C) erfassen.

Hierbei kann vorgesehen sein, dass eine, durch das wenigstens eine, von den mindestens zwei Klemmbacken 22 des wenigstens einen Manipulators 5 erfasste Stückgut 2* definierte erste vertikale Symmetrieebene S2* beabstandet ist von einer zweiten vertikalen Symmetrieebene S5, die durch den Manipulator 5 bzw. durch dessen Klemmbacken 22 definiert ist. Damit kann insbesondere definiert sein, dass das mindestens eine vom Manipulator 5 erfasste Stückgut 2* dort nicht mittig bzw. symmetrisch zur vertikalen Mittel- und/oder Drehachse des Manipulators 5 bzw. dessen Klemmbacken 22 erfasst und positioniert ist, während es verschoben und/oder in Richtung der Zielposition P (vergleiche Figur 9) gebracht wird, ggf. unter gleichzeitiger Rotation. Dies gilt gleichermaßen für zwei oder mehr erfasste Stückgüter 2*, die ebenfalls außermittig bzw. unsymmetrisch im Manipulator 5 geklemmt sein können.

Figuren 48A und 48B zeigen das unsymmetrische Beladen eines Manipulators 5, der zwischen den Klemmbacken 22 bis zu drei Stückgüter 2* erfassen kann. Wird der Manipulator 5 nur mit einem oder zwei Stückgütern 2* beladen, so erfolgt die Anordnung der Stückgüter 2* außermittig zu den Klemmbacken 22, d.h., die erste vertikale Symmetrieebene S2* ist beabstandet von der zweiten vertikalen Symmetrieebene S5 des Manipulators 5. Wird der Manipulator 5 dagegen vollständig mit drei Stückgütern 2* beladen, dann fallen die erste vertikale Symmetrieebene S2* und die zweite vertikale Symmetrieebene S5 des Manipulators 5 zusammen, was in der Figur 48C verdeutlicht ist.

Die Figuren 48D, 48E und 48F verdeutlichen denselben Zusammenhang nochmals mit anderen Bezeichnungen und anhand der nachfolgenden Gleichungs- und Ungleichungszusammenhänge. So sei L22 die Gesamtlänge der Klemmbacken 22 des Manipulators 5. L2 sei die Länge eines Stückgutes 2 bzw. 2*, das sich aktuell zwischen den Klemmbacken 22 befindet. Dementsprechend sei LR die jeweils nicht von Stückgütern 2 bzw. 2* besetzte Restlänge oder Leerlänge zwischen den Klemmbacken 22 des Manipulators 5. Wie es die Figuren 48D, 48E und 48F gemeinsam veranschaulichen, gilt bei einer Klemmbackenlänge L22, die der dreifachen Länge einer Stückgutlänge L2 entspricht, der generelle Zusammenhang:

$$LR = (3 - x) \cdot L2,$$

wobei x die Anzahl der jeweils zwischen den Klemmbacken 22 geklemmten, d.h. aktuell im Manipulator 5 befindlichen Stückgüter 2* ist. Demzufolge gilt bei nur einem im Manipulator 5 befindlichen Stückgut 2, 2*:

$$x = 1,$$

was gleichzeitig der Darstellung der Figur 48A sowie der Figur 48D entspricht, folgender Sonderfall:

$$LR = (3 - x) \cdot L2 = 2 \cdot L2$$

In entsprechender Weise gilt bei zwei unsymmetrisch im Manipulator 5 befindlichen Stückgütern 2, 2*:

$$x = 2,$$

was gleichzeitig der Darstellung der Figur 48B sowie der Figur 48E entspricht, folgender Sonderfall:

$$LR = (3 - x) \cdot L2 = 1 \cdot L2 = L2$$

In dem in Figur 48F gezeigten Sonderfall der symmetrischen Beladung des Manipulators 5 mit insgesamt drei Stückgütern 2* (vergleiche hierzu auch Figur 48C mit den zusammenfallenden Symmetrieebenen S2* und S5) gilt folglich:

$$x = 3,$$

woraus sich für die Restlänge LR ein Wert von Null errechnet:

$$LR = (3 - x) \cdot L2 = 0 \cdot L2 = 0$$

Bei den mit Bezug auf die Figuren 48A bis 48F angestellten Überlegungen wird generell von einer unsymmetrischen Beladung des Manipulators 5 bzw. von einem asymmetrischen Greifen ausgegangen, wobei die zwischen den Klemmbacken 22 befindlichen Stückgüter 2* an einem Rand der Klemmbacken 22 angeordnet sind, so dass die nicht belegte Restlänge LR immer nur einseitig auftritt, nicht jedoch beidseitig der zwischen den Klemmbacken 22 befindlichen Stückgüter. Aus diesem Grund lässt sich weiterhin feststellen, dass eine unsymmetrische Beladung des Manipulators 5 bzw. ein asymmetrisches Greifen immer dann gegeben ist, wenn beide der folgenden Bedingungen gelten:

$$L22 > x \cdot L2,$$

und

$$LR \geq (L22 - x \cdot L2) \cdot \frac{1}{2}$$

wobei x generell die Werte Null, Eins, Zwei oder Drei annehmen kann, während x zur Erfüllung der obigen Ungleichungen bei unsymmetrischer Beladung bzw. bei asymmetrischem Greifen im gezeigten Ausführungsbeispiel lediglich die Werte Eins (x = 1; vgl. Figur 48D) oder Zwei (x = 2; vgl. Figur 48E) annehmen darf, da ansonsten ein leerer Manipulator 5 (bei x = 0; nicht gezeigt) oder ein voll beladener und symmetrisch beladener Manipulator 5 (bei x = 3; vgl. Figur 48F) gegeben wäre.

Es sei an dieser Stelle der Vollständigkeit halber erwähnt, dass auch ein Fall eines symmetrischen Greifens mit nicht voll besetztem Manipulator 5 denkbar wäre, so dass zwischen den Klemmbacken 22 beispielsweise zwei Stückgüter 2* mittig angeordnet sein könnten, so dass auch die jeweiligen Symmetrieebenen S2* der Stückgüter 2* und S5 des Manipulators 5 zusammenfallen könnten. Dieser Fall wäre mit den obigen Formeln nicht darstellbar, da hierbei zwar die obige Ungleichung (L22 > x · L2) gelten würde. Allerdings wäre bei einer solchen Greifsituation die gesamte Restlänge LR zu gleichen Teilen auf beide Randabschnitte zwischen den Klemmbacken 22 verteilt, so dass die untere Ungleichung [LR ≥ (L22 - x · L2) · ½] nicht erfüllt wäre.

Der Manipulator 5 bzw. Greiferkopf 21 ist zur Änderung der Geschwindigkeit und/oder der Richtung des mindestens einen erfassten Stückgutes 2, 2* ausgebildet. Weiterhin kann der Manipulator 5 bzw. Greiferkopf 21 zusätzlich zum Drehen des mindestens einen erfassten Stückgutes 2, 2* ausgebildet sein. Beispielsweise befindet sich der oben beschriebene Greiferkopf 21 an einem Drehgelenk und kann durch Rotation um einen definierten Winkel von beispielsweise 90° die Ausrichtung der zwischen den Klemmbacken 22 erfassten Stückgüter 2, 2* verändern.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

**Bezugszeichenliste**

| | | |
|---|---|---|
| 1,1a,1b | Reihe |
| 2,2* | Stückgut |
| 3,3a,3b | Transporteinrichtung |
| 4 | Erfassungsbereich |
| 5 | Manipulator |
| 6 | Horizontalfördereinrichtung |
| 8 | Flasche |
| 9 | Schrumpffolie |
| 10 | Handhabungsvorrichtung |
| 12 | Lage |
| 20 | Gruppiermodul |
| 41 | Vorrichtung |
| 42 | Roboter, Deltaroboter, Deltakinematik-Roboter, Parallelkinematik-Roboter, Tripod |
| 43 | Aufhängung, obere Aufhängung |
| 44 | erstes Gehäuseteil |
| 45 | Stellarm |
| 46 | zweites Gehäuseteil |
| 47 | unterer Armabschnitt, Unterarm |
| 48 | Antrieb |
| 49 | oberer Armabschnitt, Oberarm |
| 50 | Manipulator |
| 52 | Betätigungsglied, Betätigungseinrichtung |
| 54 | Welle, erste Welle, äußere Welle, äußere erste Welle |
| 56 | Linearführung |
| 57 | Tragring |
| 58 | Welle, weitere Welle, zweite Welle, innere zweite Welle |
| 59 | Kontaktelement |
| 60 | Basis |
| 62 | Klemmbacke |
| 64 | Klemmbacke |
| 70 | Aktor |
| F,Fa,Fb | Formation |
| L,L2,L22,LR | Länge |
| P1 bis P8 | Zielposition, Zielpositionen |
| TR | Transportrichtung |
| v3 | Transportgeschwindigkeit |
| v6 | Geschwindigkeit |

**Patentansprüche**

1. Verfahren zum Umgang mit hintereinander bewegten Stückgütern (2), die zu einem Erfassungsbereich (4) eines Manipulators (5) transportiert werden, wobei

   - die Stückgüter (2) in mindestens einer Reihe (1) ohne Abstände unmittelbar aufeinanderfolgend als geschlossene Formation (F) in einen Erfassungsbereich (4) wenigstens eines Manipulators (5) bewegt werden;

- im Erfassungsbereich (4) wenigstens ein transportiertes Stückgut (2) mittels mindestens zwei, dem wenigstens einen Manipulator (5) zugeordneten, gegenüberliegend angeordneten Klemm- und/oder Greifmitteln (22) klemmend und/oder kraft- und/oder formschlüssig erfasst, von nachfolgenden Stückgütern (2) der geschlossenen Formation räumlich abgetrennt und in eine definierte relative Zielposition (P1, P2, P3, P4, P5, P6, P7, P8) und/oder Zielausrichtung gegenüber den jeweils nachfolgenden Stückgütern (2) gebracht wird,

- wobei eine, durch das wenigstens eine, von den mindestens zwei Klemm- und/oder Greifmitteln des wenigstens einen Manipulators (5) erfasste Stückgut (2) definierte erste vertikale und in etwa senkrecht zu einer Transportrichtung (TR) der Stückgüter (2) orientierte Symmetrieebene beabstandet ist von einer hierzu in etwa parallel ausgerichteten zweiten vertikalen Symmetrieebene, die durch den Manipulator (5) bzw. durch dessen Klemm- und/oder Greifmittel (22) definiert ist, und

- wobei in mindestens einem Schritt von mehreren zeitlich aufeinanderfolgenden Schritten jeweils wenigstens ein transportiertes Stückgut (2) erfasst und durch eine Rotation um eine vertikale Achse mit einem Rotationswinkel von mindestens 90°, insbesondere von ungefähr 180°, von einer geradlinigen Bewegungsbahn in ursprünglicher Transportrichtung (TR) jeweils räumlich von den nachfolgenden Stückgütern (2) der geschlossenen Formation abgetrennt und in eine jeweilige definierte relative Zielposition (P1, P2, P3, P4, P5, P6, P7, P8) und/oder Zielausrichtung gegenüber nachfolgenden Stückgütern (2) gebracht wird.

2. Verfahren nach Anspruch 1, bei dem das jeweils vom Manipulator (5) erfasste Stückgut (2) bei Einleitung seiner Rotation um die vertikale Achse durch Distanzierung in Transportrichtung (TR) und durch zumindest kurzzeitige Beschleunigung mit einer Bewegungskomponente parallel zu einer geradlinigen Bewegungsbahn der transportierten Stückgüter (2) bzw. der geschlossenen Formation (F) von nachfolgenden Stückgütern (2) räumlich abgetrennt und in Richtung einer jeweils definierten relativen Zielposition (P1, P2, P3, P4, P5, P6, P7, P8) und/oder Zielausrichtung gegenüber den nachfolgenden Stückgütern (2) gebracht wird.

3. Verfahren nach einem der Ansprüche 1 bis 2, bei welchem dem wenigstens einem erfassten Stückgut (2) gegenüber einer Transportgeschwindigkeit (v3) der geschlossenen Formation (F) überlagerte weitere Geschwindigkeits- und/oder Richtungs- und/oder Drehbewegungskomponenten aufgeprägt werden.

4. Verfahren nach einem der Ansprüche 1 bis 3, bei dem der Manipulator (5) bzw. dessen mindestens zwei Klemm- und/oder Greifmittel (22) nach einer Rotation um eine vertikale Achse von etwa 180°, nach Erreichung einer jeweiligen Zielposition (P1, P2, P3, P4, P5, P6, P7, P8) und/oder Zielausrichtung sowie nach Freigabe des dort positionierten mindestens einen Stückgutes (2) ohne Rückdrehung und/oder ohne weitere Rotation der mindestens zwei Klemm- und/oder Greifmittel (22) wenigstens ein weiteres zu positionierendes und/oder neu auszurichtendes Stückgut (2) von der Reihe (1) bzw. der geschlossenen Formation (F) erfasst bzw. erfassen und mit oder ohne Rotation um eine vertikale Achse in eine weitere Zielposition (P1, P2, P3, P4, P5, P6, P7, P8) und/oder Zielausrichtung innerhalb des Erfassungsbereiches (4) verbringt bzw. verbringen.

5. Verfahren nach einem der Ansprüche 1 bis 4, bei dem die Drehbewegungen jeweils um eine vorzugsweise in etwa vertikale Achse erfolgen, welche sich zwischen dem jeweiligen wenigstens einen erfassten Stückgut (2) und der jeweiligen definierten Zielposition (P1, P2, P3, P4, P5, P6, P7, P8) befindet.

6. Verfahren nach Anspruch 5, bei dem wenigstens ein zuvorderst transportiertes Stückgut (2) aus der geschlossenen Formation (F) erfasst und um einen Winkel von zumindest näherungsweise 90° oder von zumindest näherungsweise 180° um die Achse gedreht wird, welche Achse sich zwischen dem jeweiligen wenigstens einen erfassten Stückgut (2) und der jeweiligen definierten Zielposition (P1, P2, P3, P4, P5, P6, P7, P8) befindet.

7. Verfahren nach Anspruch 5 oder 6, bei dem die Achse der Drehbewegung im Verlauf der Drehbewegung zumindest zeit- und/oder abschnittsweise in Richtung der jeweiligen definierten Zielposition (P1, P2, P3, P4, P5, P6, P7, P8) bewegt wird.

8. Verfahren nach Anspruch 7, bei dem die Achse im Verlauf der Drehbewegung zumindest zeitweise in Richtung der jeweiligen definierten Zielposition (P1, P2, P3, P4, P5, P6, P7, P8) mit einer Geschwindigkeit bewegt wird, die größer ist als eine Transportgeschwindigkeit (v3) der geschlossenen Formation (F).

9. Verfahren nach einem der Ansprüche 5 bis 8, bei dem die Achse im Verlauf der Drehbewegung zumindest zeitweise in einer bestimmten Position verweilt.

10. Verfahren nach Anspruch 8 und/oder 9, bei welchem

- die Achse im Verlauf der Drehbewegung zumindest zeitweise in Richtung der jeweiligen definierten Zielposition (P1, P2, P3, P4, P5, P6, P7, P8) mit einer Geschwindigkeit bewegt wird, die größer ist als die Transportgeschwindigkeit (v3) der geschlossenen Formation (F), und bei dem zeitlich anschließend

- die Achse im Verlauf der Drehbewegung zumindest zeitweise in einer bestimmten Position verweilt.

11. Verfahren nach einem der Ansprüche 1 bis 10, bei dem zeitlich aufeinander folgend mehrmals wenigstens ein transportiertes Stückgut (2) aus der geschlossenen Formation (F) klemmend und/oder formschlüssig erfasst, von der geschlossenen Formation (F) räumlich abgetrennt und in eine jeweilige definierte relative Zielposition (P1, P2, P3, P4, P5, P6, P7, P8) und/oder Zielausrichtung gegenüber nachfolgenden Stückgütern (2) gebracht wird, woraus resultierend aus mehreren Stückgütern (2) eine Vorgruppierung oder eine Gruppierung für eine palettierfähige Lage (12) oder Teillage gebildet wird.

12. Verfahren nach einem der Ansprüche 1 bis 11, bei dem die Drehbewegungen des wenigstens einen Manipulators (5) bei wenigstens zwei aufeinanderfolgenden Schritten zum jeweiligen Verbringen von Stückgütern (2) von der geschlossenen Formation (F) in die jeweils vorgesehenen Zielpositionen (P1, P2, P3, P4, P5, P6, P7, P8) und/oder Zielausrichtungen mit jeweils gleichsinnigem Drehsinn erfolgen, insbesondere unter Weiterdrehung des Manipulators (5) über einen Drehwinkel von 180° hinaus.

**Claims**

1. A method used to handle piece goods (2) being moved one after another, the piece goods (2) being transported to a seizing range (4) of a manipulator (5), wherein

- the piece goods (2) are moved in at least one row (1) without spaces immediately consecutively as closed formation (F) into a seizing range (4) of at least one manipulator (5);
- at least one transported piece good (2) is seized in the seizing range (4) in a clamping and/or force-locking and/or form-locking manner by at least two clamping means and/or gripping means (22) located opposite each other and assigned to the at least one manipulator (5), is spatially separated from subsequent piece goods (2) of the closed formation, and is brought into a defined relative target position (P1, P2, P3, P4, P5, P6, P7, P8) and/or target alignment in relation to the in each instance subsequent piece goods (2),

- wherein one first vertical symmetry plane, which is defined by the at least one piece good (2) seized by the at least two clamping means and/or gripping means of the at least one manipulator (5), and which is oriented about perpendicular to a transport direction (TR) of the piece goods (2), is spaced apart from a second vertical symmetry plane aligned approximately parallel thereto, with the second vertical symmetry plane being defined by the manipulator (5) or by the manipulator clamping means and/or gripping means (22), as applicable, and
- wherein at least one transported piece good (2) is in each instance seized in at least one step of a plurality of temporally consecutive steps, and is in each instance spatially separated from a straight movement path in original transport direction (TR) from the subsequent piece goods (2) of the closed formation by a rotation about a vertical axis with a rotation angle of at least 90°, in particular, with approximately 180°, and is brought into a particular defined relative target position (P1, P2, P3, P4, P5, P6, P7, P8) and/or target alignment in relation to subsequent piece goods (2).

2. The method according to claim 1, in which the piece good (2) seized in each instance by the manipulator (5) is spatially separated from subsequent piece goods (2) upon initiation of its rotation about the vertical axis by being distanced in transport direction (TR) and by being at least briefly accelerated with a movement component parallel to a straight movement path of the transported piece goods (2) or of the closed formation (F), as applicable, and is brought toward an in each instance defined relative target position (P1, P2, P3, P4, P5, P6, P7, P8) and/or target alignment in relation to subsequent piece goods (2).

3. The method according to one of the claims 1 to 2, in which overlapping further velocity components and/or direction components and/or rotation components in relation to a transport speed (v3) of the closed formation (F) are imparted to the at least one seized piece good (2).

4. The method according to one of the claims 1 to 3, in which, after the manipulator (5) rotates or, as applicable, the manipulator clamping means and/or gripping means (22) rotate by approximately 180° about a vertical axis, reaches or reach a particular target position (P1, P2, P3, P4, P5, P6, P7, P8) and/or target alignment, as well as releases or release the at least one piece good (2) that is positioned there, the manipulator (5) seizes or, as applicable, the manipulator clamping means and/or gripping means (22) seize at least one further piece good (2), which is to be positioned and/or to be realigned, from the row (1) or, as applicable, from the closed formation (F) without a return rotation and/or without a further rotation of the at least two clamping means and/or gripping means (22), and the manipulator (5) brings or, as applicable, the manipulator clamping means and/or gripping means (22) bring the piece good (2) with or without rotation about a vertical axis into a further target position (P1, P2, P3, P4, P5, P6, P7, P8) and/or target alignment within the seizing range (4).

5. The method according to one of the claims 1 to 4, in which the rotary movements are in each instance carried out about a preferably approximately vertical axis, which is located between the particular at least one seized piece good (2) and the particular defined target position (P1, P2, P3, P4, P5, P6, P7, P8).

6. The method according to claim 5, in which at least one foremost transported piece good is seized from the closed formation (F) and is rotated by an angle of at least approximately 90° or of at least approximately 180° about the axis, which is located between the particular at least one seized piece good (2) and the particular defined target position (P1, P2, P3, P4, P5, P6, P7, P8).

7. The method according to claim 5 or 6, in which the axis of the rotary movement is moved toward the particular defined target position (P1, P2, P3, P4, P5, P6, P7, P8) at least intermittently and/or in sections in the course of the rotary movement.

8. The method according to claim 7, in which the axis is moved toward the particular defined target position (P1, P2, P3, P4, P5, P6, P7, P8) at least intermittently in the course of the rotary movement at a speed that is greater than a transport speed (v3) of the closed formation (F).

9. The method according to one of the claims 5 to 8, in which the axis remains in a specific position at least intermittently in the course of the rotary movement.

10. The method according to claim 8 and/or 9, in which

   - the axis is moved toward the particular defined target position (P1, P2, P3, P4, P5, P6, P7, P8) at least intermittently in the course of the rotary movement at a speed that is greater than a transport speed (v3) of the closed formation (F), and in which temporally subsequently
   - the axis remains in a specific position at least intermittently in the course of the rotary movement.

11. The method according to one of the claims 1 to 10, in which at least one transported piece good (2) is seized in a clamping and/or form-locking manner from the closed formation (F), is spatially separated from the closed formation (F), and is brought into a particular defined relative target position (P1, P2, P3, P4, P5, P6, P7, P8) and/or target alignment in relation to subsequent piece goods (2), these steps being repeated a number of times in succession, with the result that a pre-grouping or a grouping for a palletizable layer (12) or partial layer is formed from a plurality of piece goods (2).

12. The method according to one of the claims 1 to 11, in which, with at least two consecutive steps for the particular bringing of piece goods (2) from the closed formation (F) into the in each instance intended target positions (P1, P2, P3, P4, P5, P6, P7, P8) and/or target alignments, the rotary movements of the at least one manipulator (5) can be carried out in each instance with the same sense of rotation, in particular, under further rotation of the manipulator (5) beyond a rotation angle of 180°.

**Revendications**

1. Procédé de manipulation de produits de détail (2) déplacés les uns derrière les autres qui sont transportés vers une zone de saisie (4) d'un manipulateur (5), dans lequel

   - les produits de détail (2) sont déplacés en au moins une rangée (1), sans intervalles immédiatement les uns après les autres, en tant que formation fermée (F), dans une zone de saisie (4) d'au moins un manipulateur (5);
   - dans la zone de saisie (4), au moins un produit de détail (2) transporté est saisi par serrage et/ou par adhérence et/ou à engagement positif par l'intermédiaire d'au moins deux moyens de serrage et/ou de préhension (22) qui sont associés audit au moins un manipulateur (5) et sont agencés en vis-à-vis l'un de l'autre, est séparé spatialement de produits de détail (2) suivants de la formation fermée (F) et est amené dans une position cible (P1, P2, P3, P4, P5, P6, P7, P8) et/ou orientation cible relative(s) définie(s) par rapport aux produits de détail (2) respectivement suivants,
   - dans lequel un premier plan de symétrie vertical qui est défini par ledit au moins un produit de détail (2) saisi par lesdits au moins deux moyens de serrage et/ou de préhension dudit au moins un manipulateur (5) et qui est orienté à peu près perpendiculairement à une direction de transport (TR) des produits de détail (2) est espacé d'un deuxième plan de symétrie vertical qui est orienté à peu près parallèlement à celui-ci et qui est défini par le manipulateur (5) ou bien par les moyens de serrage et/ou de préhension (22) de ce dernier, et

- dans lequel, dans au moins une étape de plusieurs étapes se suivant dans le temps, respectivement au moins un produit de détail (2) transporté est saisi et est séparé respectivement spatialement des produits de détail (2) suivants de la formation fermée par une rotation autour d'un axe vertical avec un angle de rotation d'au moins 90°, en particulier de 180° à peu près, d'une trajectoire rectiligne de mouvement dans la direction de transport d'origine (TR), et est amené dans une position cible (P1, P2, P3, P4, P5, P6, P7, P8) et une orientation cible relative(s) définie(s) respective(s) par rapport à des produits de détail (2) suivants,

2. Procédé selon la revendication 1, dans lequel le produit de détail (2) respectivement saisi par le manipulateur (5) est séparé spatialement de produits de détail (2) suivants, lors de l'initiation de sa rotation autour de l'axe vertical, en étant espacé dans la direction de transport (TR) et en étant accéléré au moins pour une courte durée avec une composante de mouvement parallèle à une trajectoire rectiligne de mouvement des produits de détail (2) transportés ou bien de la formation fermée (F), et est amené en direction d'une position cible (P1, P2, P3, P4, P5, P6, P7, P8) et/ou d'une orientation cible relative(s) respectivement définie(s) par rapport aux produits de détail (2) suivants.

3. Procédé selon l'une quelconque des revendications 1 à 2, dans lequel d'autres composantes de vitesse et/ou de direction et/ou de mouvement de rotation superposées par rapport à une vitesse de transport (v3) de la formation fermée (F) sont imposées audit au moins un produit de détail (2) saisi.

4. Procédé selon l'une quelconque des revendications 1 à 3, dans lequel, après une rotation autour d'un axe vertical de 180° à peu près, après avoir atteint une position cible (P1, P2, P3, P4, P5, P6, P7, P8) et/ou une orientation cible(s) respective(s) ainsi qu'après avoir libéré ledit au moins un produit de détail (2) y positionné, le manipulateur (5) ou bien lesdits au moins deux moyens de serrage et/ou de préhension (22) de celui-ci saisit ou bien saisissent au moins un autre produit de détail (2) à positionner et/ou à réaligner de la rangée (1) ou bien de la formation fermée (F) sans une rotation de retour et/ou sans une autre rotation desdits au moins deux moyens de serrage et/ou de préhension (22), et amène ou bien amènent celui-ci dans une autre position cible (P1, P2, P3, P4, P5, P6, P7, P8) et/ou orientation cible à l'intérieur de la zone de saisie (4), avec ou sans rotation autour d'un axe vertical.

5. Procédé selon l'une quelconque des revendications 1 à 4, dans lequel les mouvements de rotation se font chacun autour d'un axe de préférence à peu près vertical qui est situé entre ledit au moins un produit de détail (2) saisi respectif et la position cible (P1, P2, P3, P4, P5, P6, P7, P8) définie respective.

6. Procédé selon la revendication 5, dans lequel au moins un produit de détail (2) transporté en premier est saisi dans la formation fermée (F) et est tourné d'un angle d'au moins 90° approximativement ou d'au moins 180° approximativement autour de l'axe, lequel axe se trouve entre ledit au moins un produit de détail (2) saisi respectif et la position cible (P1, P2, P3, P4, P5, P6, P7, P8) définie respective.

7. Procédé selon la revendication 5 ou 6, dans lequel l'axe du mouvement de rotation est déplacé au cours du mouvement de rotation au moins temporairement et/ou par sections en direction de la position cible (P1, P2, P3, P4, P5, P6, P7, P8) définie respective.

8. Procédé selon la revendication 7, dans lequel l'axe est déplacé au cours du mouvement de rotation, au moins temporairement, en direction de la position cible (P1, P2, P3, P4, P5, P6, P7, P8) définie respective à une vitesse qui est supérieure à une vitesse de transport (v3) de la formation fermée (F).

9. Procédé selon l'une quelconque des revendications 5 à 8, dans lequel l'axe reste au moins temporairement, au cours du mouvement de rotation, dans une position déterminée.

10. Procédé selon la revendication 8 et/ou 9, dans lequel

- l'axe est déplacé au cours du mouvement de rotation, au moins temporairement, en direction de la position cible (P1, P2, P3, P4, P5, P6, P7, P8) définie respective à une vitesse qui est supérieure à la vitesse de transport (v3) de la formation fermée (F), et dans lequel, ensuite,
- l'axe reste au moins temporairement, au cours du mouvement de rotation, dans une position déterminée.

11. Procédé selon l'une quelconque des revendications 1 à 10, dans lequel au moins un produit de détail (2) transporté est saisi successivement, à plusieurs reprises, par serrage et/ou à engagement positif dans la formation fermée (F), est séparé spatialement de la formation fermée (F) et est amené dans une position cible (P1, P2, P3, P4, P5, P6, P7, P8) et/ou orientation cible relative(s) définie(s) respective(s) par rapport à des produits de détail (2) suivants, d'où résulte qu'un pré-groupement ou un groupement pour une couche palettisable (12) ou une couche partielle est formé à partir de plusieurs produits de détails (2).

12. Procédé selon l'une quelconque des revendications 1 à 11, dans lequel les mouvements de rotation dudit au moins un manipulateur (5), dans au moins deux étapes successives, pour amener respectivement des produits de détail (2) de la formation fermée (F) dans les positions cibles (P1, P2, P3, P4, P5, P6, P7, P8) et/ou orientations cibles respectivement prévues, se font avec un sens de rotation respectivement de même sens, en particulier en continuant à tourner le manipulateur (5) au-delà d'un angle de rotation de 180°.

Fig. 1

Fig. 2

EP 3 445 689 B2

Fig. 3

Fig. 4

Fig. 5

Fig. 6

EP 3 445 689 B2

Fig. 7

TR, v6

2,2*

3,3a

1,1a,F,Fa

6

5

TR, v3

1,1b,F,Fb

3,3b

10

4

20

2

Fig. 8

TR, v6

2,2*

3,3a

1,1a,F,Fa

6

5

TR, v3

1,1b,F,Fb

3,3b

10

4

20

2

Fig. 9

Fig. 10

EP 3 445 689 B2

Fig. 11

Fig. 12

EP 3 445 689 B2

Fig. 13

Fig. 14

EP 3 445 689 B2

Fig. 15

Fig. 16

EP 3 445 689 B2

Fig. 17

Fig. 18

Fig. 19

Fig. 20

Fig. 21

Fig. 22

Fig. 23

TR, v6

3,3a

1,1a,F,Fa

TR, v3

1,1b,F,Fb

3,3b

6

5

10

4

20

2

Fig. 24

TR, v6

3,3a

1,1a,F,Fa

TR, v3

1,1b,F,Fb

3,3b

6

5

10

4

20

2

EP 3 445 689 B2

Fig. 25

Fig. 26

EP 3 445 689 B2

Fig. 27

Fig. 28

EP 3 445 689 B2

Fig. 29

Fig. 30

Fig. 31

Fig. 32

Fig. 33

Fig. 34

Fig. 35

Fig. 36

Fig. 37

TR, v6

3,3a

1,1a,F,Fa

6

5

TR, v3

1,1b,F,Fb

10

4

20

2

3,3b

Fig. 38

TR, v6

3,3a

6

1,1a,F,F

5

TR, v3

10

4

20

2

1,1b,F,Fb

3,3b

EP 3 445 689 B2

Fig. 39

Fig. 40

Fig. 41

Fig. 42

Fig. 43

3,3a  1,1a,F,Fa  TR, v3  1,1b,F,Fb  3,3b  2  5  20  4  6  TR, v6  10

Fig. 44

3,3a  1,1a,F,Fa  TR, v3  1,1b,F,Fb  3,3b  2  20  2,2*,P4  2,2*,P7  2,2*,P8  2,2*,P3  5  2,2*,P6  4  2,2*,P5  2,2*,P1  6  2,2*,P2  TR, v6  10

Fig. 45

EP 3 445 689 B2

Fig. 46

EP 3 445 689 B2

Fig. 47

5,50

47

52, 58

56, 54

47

47

59

62

64

60

52

Fig. 48

(A) ein 2*  S5  S2*  5,21  22

(B) zwei 2*  S5  S2*  5,21

(C) S5=S2*  drei 2*  L  5,21

(D) ein 2*  L22  22  5  LR  L2

(E) zwei 2*  L22  5  LR  L2  L2

(F) drei 2*  L22  5  L2  L2  L2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1456101 A2
- US 5123231 A
- EP 1927559 A1
- US 20050246056 A1
- EP 2107018 A1
- DE 102011080812 A1
- DE 102009026220 A1
- DE 102009043970 A1
- DE 102010020847 A1
- DE 10219129 A1
- DE 4439728 A1
- DE 102010006155 A1
- DE 102013208082 A1
- US 8210068 B1
- DE 102013106004 A1